# EUROPEAN PATENT APPLICATION

(11) **EP 4 727 201 A1**
(43) Date of publication of application: **15.04.2026**
(21) Application number: 24842216.4
(22) Date of filing: 05.07.2024
(51) Int. Cl.: H04W 24/02

(54) **SENSING METHOD AND RELATED APPARATUS**

(30) Priority: 20.07.2023 CN 202310897955
(71) Applicant: Huawei Technologies Co., Ltd., Shenzhen, Guangdong 518129 (CN)
(72) Inventor: MOU, Xin, Shenzhen, Guangdong 518129 (CN); ZHOU, Runze, Shenzhen, Guangdong 518129 (CN)
(74) Representative: Isarpatent
(86) International application number: PCT/CN2024/103912
(87) International publication number: WO 2025/016221

(57) **Abstract**

This application provides a sensing method and a related apparatus. The method includes: A control device receives a sensing request from a requesting device. The sensing request includes information indicating a sensing object. The control device determines first beam information based on the information indicating the sensing object. The first beam information indicates a beam used to perform sensing on the sensing object. The control device sends first sensing control information to a first sensing device. The first sensing control information includes the first beam information, and the first sensing device is configured to perform sensing on the sensing object. According to the technical solutions provided in this application, sensing resource utilization can be improved, and diversified sensing precision requirements can be met.

## Description

This application claims priority to Chinese Patent Application No. 202310897955.0, filed with the China National Intellectual Property Administration on July 20, 2023 and entitled "SENSING METHOD AND RELATED APPARATUS", which is incorporated herein by reference in its entirety.

### TECHNICAL FIELD

This application relates to the field of sensing technologies, and in particular, to a sensing method and a related apparatus.

### BACKGROUND

Integrated sensing and communication refers to unifying communication and sensing functions through joint signal design, hardware sharing, and the like. The sensing refers to a radio sensing technology based on a communication system. The radio sensing technology is a technology of transmitting a radio signal to a specific area or a specific substance and then processing a received radio signal to obtain information about the area or the substance. A basic principle is obtaining abundant environment information by using radio channel characteristics, to implement basic sensing applications.

Wireless communication networks naturally have wireless sensing capabilities. For example, base stations and terminals have both communication and sensing capabilities, and can provide sensing services for sensing applications, which function in a plurality of fields such as smart transportation, uncrewed aerial vehicle supervision, railway perimeter security detection, smart home, public security, health monitoring, and environment monitoring.

In current sensing methods, generally, a network controls a base station to perform a common sensing operation procedure for a specific location or range. As a result, it is difficult to meet different requirements for different sensing objects, sensing precision is limited, and resource utilization is low.

### SUMMARY

Embodiments of this application provide a sensing method and a related apparatus, to improve sensing resource utilization and meet diversified sensing precision requirements.

According to a first aspect, an embodiment of this application provides a sensing method. The method includes:
A control device receives a sensing request from a requesting device. The sensing request includes information indicating a sensing object.

The control device determines first beam information based on the information indicating the sensing object. The first beam information indicates a beam used to perform sensing on the sensing object.

The control device sends first sensing control information to a first sensing device. The first sensing control information includes the first beam information, and the first sensing device is configured to perform sensing on the sensing object.

In the foregoing embodiment, the control device determines, based on the information indicating the sensing object, the first beam information indicating the beam used to perform sensing on the sensing object, and the control device sends the first sensing control information including the first beam information to the first sensing device, so that the first sensing device performs sensing on the sensing object based on the first beam information. Because the first beam information is dynamically determined for the sensing object, and is adaptive to the sensing object, it may be considered that when the first sensing device performs sensing on the sensing object based on the first beam information, a used sensing resource is adaptive to a sensing resource actually required by the sensing object. This helps to avoid unnecessary sensing resource waste and improve sensing resource utilization.

In addition, the first beam information may further reflect sensing precision. For example, if a beam width indicated by the first beam information is narrower, that is, the beam is more focused, and a signal that can be generated is stronger, it may be considered that sensing precision that can be implemented is higher. For another example, if the beam width indicated by the first beam information is wider, that is, the beam is more divergent, and a signal that can be generated is weaker, it may be considered that sensing precision that can be implemented is higher. Therefore, it may be considered that when the first sensing device performs sensing on the sensing object based on the first beam information, implemented sensing precision is also adaptive to sensing precision actually required by the sensing object. This helps to resolve a problem of limited sensing precision and meet diversified sensing precision requirements.

With reference to the first aspect, in some implementations of the first aspect, the first beam information includes a beam width, or the first beam information includes a beam width and a beam direction.

In the foregoing implementation, the first beam information may indicate a beam width, so that the first sensing device may perform sensing on the sensing object based on the beam width indicated by the control device. The first beam information may further indicate a beam direction, so that the first sensing device may further perform sensing on the sensing object based on the beam direction indicated by the control device.

With reference to the first aspect, in some implementations of the first aspect, the first sensing control information further includes a sensing type.

In the foregoing implementation, the first sensing control information may further indicate a sensing type, so that the first sensing device may perform sensing on the sensing object based on the sensing type indicated by the control device.

With reference to the first aspect, in some implementations of the first aspect, the information indicating the sensing object includes one or more of the following information: an identifier of the sensing object, sensing area information, and sensing location information.

In the foregoing implementation, the sensing object may be indicated accurately by using one or more of the identifier of the sensing object, the sensing area information, or the sensing location information.

With reference to the first aspect, in some implementations of the first aspect, the first sensing control information further includes sensing precision information and/or sensing time information.

In the foregoing implementation, the first sensing control information may further indicate sensing precision information and/or sensing time information, so that the first sensing device may perform sensing on the sensing object based on the sensing precision information and/or the sensing time information indicated by the control device.

With reference to the first aspect, in some implementations of the first aspect, the first sensing control information further includes a cooperative sensing mode.

In the foregoing implementation, the first sensing control information may further indicate a cooperative sensing mode, to indicate the first sensing device to perform sensing on the sensing object in cooperation with another sensing device.

With reference to the first aspect, in some implementations of the first aspect, the method further includes:
The control device sends the first sensing control information to a second sensing device. The second sensing device is configured to perform sensing on the sensing object.

In the foregoing implementation, the control device sends the first sensing control information to the second sensing device, so that the second sensing device and the first sensing device cooperatively perform sensing on the sensing object.

With reference to the first aspect, in some implementations of the first aspect, the method further includes:
The control device receives first sensing data from the first sensing device. The first sensing data is sensing data obtained by the first sensing device by performing sensing on the sensing object based on the first beam information.

The control device processes the first sensing data to obtain a first sensing result.

The control device sends the first sensing result to the requesting device.

In the foregoing implementation, the control device receives the first sensing data from the first sensing device, processes the first sensing data to obtain the first sensing result, and sends the first sensing result to the requesting device, so that a requester can learn of the sensing result about the sensing object in time.

With reference to the first aspect, in some implementations of the first aspect, the method further includes:
The control device determines second beam information based on the first sensing result. The second beam information is different from the first beam information.

The control device sends second sensing control information to the first sensing device. The second sensing control information includes the second beam information.

In the foregoing implementation, the control device may adjust the first beam information based on the first sensing result to obtain the second beam information, and send the second sensing control information including the second beam information to the first sensing device, so that the first sensing device may subsequently perform a sensing operation based on the second beam information.

With reference to the first aspect, in some implementations of the first aspect, the first beam information includes a first beam width, the second beam information includes a second beam width, and that the second beam information is different from the first beam information includes that the second beam width is less than the first beam width.

In the foregoing implementation, the control device supports adjustment of the beam width. With the beam width reduced, the beam can be more focused, and a stronger sensing signal can be generated, so that the sensing device can be indicated to subsequently perform a higher-precision sensing operation, and different precision requirements from area sensing to specific target sensing can be met.

With reference to the first aspect, in some implementations of the first aspect, the first sensing device is a base station, and the second sensing device is a base station or a terminal device.

According to a second aspect, an embodiment of this application provides a sensing method. The method includes:
A first sensing device receives first sensing control information from a control device. The first sensing control information includes first beam information, and the first beam information indicates a beam used to perform sensing on a sensing object.

The first sensing device performs sensing on the sensing object based on the first beam information.

According to a third aspect, an embodiment of this application provides a sensing method. The method includes:
A first sensing device receives first sensing control information from a control device. The first sensing control information includes information indicating a sensing object.

The first sensing device determines first beam information based on the information indicating the sensing object. The first beam information indicates a beam used to perform sensing on the sensing object.

The first sensing device performs sensing on the sensing object based on the first beam information.

In the foregoing embodiment, the control device/first sensing device determines, based on the information indicating the sensing object, the first beam information indicating the beam used to perform sensing on the sensing object, and the control device sends the first sensing control information to the first sensing device, so that the first sensing device performs sensing on the sensing object based on the first beam information. Because the first beam information is dynamically determined for the sensing object, and is adaptive to the sensing object, it may be considered that when the first sensing device performs sensing on the sensing object based on the first beam information, a used sensing resource is adaptive to a sensing resource actually required by the sensing object. This helps to avoid unnecessary sensing resource waste and improve sensing resource utilization.

In addition, the first beam information may further reflect sensing precision. For example, if a beam width indicated by the first beam information is narrower, that is, the beam is more focused, and a signal that can be generated is stronger, it may be considered that sensing precision that can be implemented is higher. For another example, if the beam width indicated by the first beam information is wider, that is, the beam is more divergent, and a signal that can be generated is weaker, it may be considered that sensing precision that can be implemented is higher. Therefore, it may be considered that when the first sensing device performs sensing on the sensing object based on the first beam information, implemented sensing precision is also adaptive to sensing precision actually required by the sensing object. This helps to resolve a problem of limited sensing precision and meet diversified sensing precision requirements.

With reference to the second/third aspect, in some implementations of the second/third aspect, the first beam information includes a beam width, or the first beam information includes a beam width and a beam direction.

With reference to the second/third aspect, in some implementations of the second/third aspect, the first sensing control information further includes a sensing type.

With reference to the second/third aspect, in some implementations of the second/third aspect, the information indicating the sensing object includes one or more of the following information: an identifier of the sensing object, sensing area information, and sensing location information.

With reference to the second/third aspect, in some implementations of the second/third aspect, the first sensing control information further includes sensing precision information and/or sensing time information.

With reference to the second/third aspect, in some implementations of the second/third aspect, the first sensing control information further includes a cooperative sensing mode.

With reference to the second/third aspect, in some implementations of the second/third aspect, the method further includes:
The first sensing device sends indication information to a second sensing device. The indication information includes the first beam information and the cooperative sensing mode, and the second sensing device is configured to perform sensing on the sensing object.

In the foregoing implementation, the first sensing device sends the indication information that includes the first beam information and the cooperative sensing mode to the second sensing device, so that the second sensing device and the first sensing device cooperatively perform sensing on the sensing object.

With reference to the second/third aspect, in some implementations of the second/third aspect, the method further includes:
The first sensing device receives second sensing control information from the control device. The second sensing control information includes second beam information, the second beam information indicates a beam used to perform sensing on a sensing target, and the second beam information is different from the first beam information.

The first sensing device performs sensing on the sensing target based on the second beam information.

In the foregoing implementation, the control device may determine the second beam information based on information indicating the sensing target. That is, the control device may independently determine the second beam information, include the second beam information into the second sensing control information, and send the second sensing control information to the first sensing device, so that the first sensing device can directly obtain the second beam information from the second sensing control information, and then perform sensing on the sensing target based on the second beam information.

With reference to the second/third aspect, in some implementations of the second/third aspect, the method further includes:
The first sensing device receives second sensing control information from the control device. The second sensing control information includes information indicating a sensing target.

The first sensing device determines second beam information based on the information indicating the sensing target. The second beam information indicates a beam used to perform sensing on the sensing target, and the second beam information is different from the first beam information.

The first sensing device performs sensing on the sensing target based on the second beam information.

In the foregoing implementation, the control device sends, to the first sensing device, the information indicating the sensing target, and the first sensing device determines the second beam information based on the information indicating the sensing target. That is, the control device and the first sensing device may cooperatively determine the second beam information, and then the first sensing device may perform sensing on the sensing target based on the second beam information.

With reference to the second/third aspect, in some implementations of the second/third aspect, the method further includes:
The first sensing device obtains, based on first sensing data, information indicating a sensing target. The first sensing data is sensing data obtained by the first sensing device by performing sensing on the sensing object based on the first beam information.

The first sensing device determines second beam information based on the information indicating the sensing target. The second beam information indicates a beam used to perform sensing on the sensing target, and the second beam information is different from the first beam information.

The first sensing device performs sensing on the sensing target based on the second beam information.

In the foregoing implementation, the first sensing device obtains, based on the first sensing data, the information indicating the sensing target, and determines the second beam information based on the information indicating the sensing target. That is, the first sensing device may independently determine the second beam information, and then may perform sensing on the sensing target based on the second beam information.

With reference to the second/third aspect, in some implementations of the second/third aspect, the first beam information includes a first beam width, the second beam information includes a second beam width, and that the second beam information is different from the first beam information includes that the second beam width is less than the first beam width.

With reference to the second/third aspect, in some implementations of the second/third aspect, the first sensing device is a base station, and the second sensing device is a base station or a terminal device.

For beneficial effects of implementations whose beneficial effects are not described in the second/third aspect, refer to descriptions of beneficial effects in corresponding implementations of the first aspect. Details are not described herein again.

According to a fourth aspect, an embodiment of this application provides a sensing apparatus. The apparatus includes a module or a unit configured to perform the method according to any one of the first aspect or the possible implementations of the first aspect. The apparatus includes:
a transceiver unit, configured to receive a sensing request from a requesting device, where the sensing request includes information indicating a sensing object; and
a processing unit, configured to determine first beam information based on the information indicating the sensing object, where the first beam information indicates a beam used to perform sensing on the sensing object.

The transceiver unit is further configured to send first sensing control information to a first sensing device. The first sensing control information includes the first beam information, and the first sensing device is configured to perform sensing on the sensing object.

With reference to the fourth aspect, in some implementations of the fourth aspect, the first beam information includes a beam width, or the first beam information includes a beam width and a beam direction.

With reference to the fourth aspect, in some implementations of the fourth aspect, the first sensing control information further includes a sensing type.

With reference to the fourth aspect, in some implementations of the fourth aspect, the information indicating the sensing object includes one or more of the following information: an identifier of the sensing object, sensing area information, and sensing location information.

With reference to the fourth aspect, in some implementations of the fourth aspect, the first sensing control information further includes sensing precision information and/or sensing time information.

With reference to the fourth aspect, in some implementations of the fourth aspect, the first sensing control information further includes a cooperative sensing mode.

With reference to the fourth aspect, in some implementations of the fourth aspect, the transceiver unit is further configured to send the first sensing control information to a second sensing device. The second sensing device is configured to perform sensing on the sensing object.

With reference to the fourth aspect, in some implementations of the fourth aspect, the transceiver unit is further configured to receive first sensing data from the first sensing device. The first sensing data is sensing data obtained by the first sensing device by performing sensing on the sensing object based on the first beam information. The processing unit is further configured to process the first sensing data to obtain a first sensing result. The transceiver unit is further configured to send the first sensing result to the requesting device.

With reference to the fourth aspect, in some implementations of the fourth aspect, the processing unit is further configured to determine second beam information based on the first sensing result. The second beam information is different from the first beam information. The transceiver unit is further configured to send second sensing control information to the first sensing device. The second sensing control information includes the second beam information.

With reference to the fourth aspect, in some implementations of the fourth aspect, the first beam information includes a first beam width, the second beam information includes a second beam width, and that the second beam information is different from the first beam information includes that the second beam width is less than the first beam width.

According to a fifth aspect, an embodiment of this application provides a sensing apparatus. The apparatus includes a module or a unit configured to perform the method according to any one of the second aspect or the possible implementations of the second aspect. The apparatus includes:
a transceiver unit, configured to receive first sensing control information from a control device, where the first sensing control information includes first beam information, and the first beam information indicates a beam used to perform sensing on a sensing object; and
a processing unit, configured to perform sensing on the sensing object based on the first beam information.

According to a sixth aspect, an embodiment of this application provides a sensing apparatus. The apparatus includes a module or a unit configured to perform the method according to any one of the third aspect or the possible implementations of the third aspect. The apparatus includes:
a transceiver unit, configured to receive first sensing control information from a control device, where the first sensing control information includes information indicating a sensing object; and
a processing unit, configured to: determine first beam information based on the information indicating the sensing object, where the first beam information indicates a beam used to perform sensing on the sensing object; and perform sensing on the sensing object based on the first beam information.

With reference to the fifth/sixth aspect, in some implementations of the fifth/sixth aspect, the first beam information includes a beam width, or the first beam information includes a beam width and a beam direction.

With reference to the fifth/sixth aspect, in some implementations of the fifth/sixth aspect, the first sensing control information further includes a sensing type.

With reference to the fifth/sixth aspect, in some implementations of the fifth/sixth aspect, the information indicating the sensing object includes one or more of the following information: an identifier of the sensing object, sensing area information, and sensing location information.

With reference to the fifth/sixth aspect, in some implementations of the fifth/sixth aspect, the first sensing control information further includes sensing precision information and/or sensing time information.

With reference to the fifth/sixth aspect, in some implementations of the fifth/sixth aspect, the first sensing control information further includes a cooperative sensing mode.

With reference to the fifth/sixth aspect, in some implementations of the fifth/sixth aspect, the transceiver unit is further configured to send indication information to a second sensing device. The indication information includes the first beam information and the cooperative sensing mode, and the second sensing device is configured to perform sensing on the sensing object.

With reference to the fifth/sixth aspect, in some implementations of the fifth/sixth aspect, the transceiver unit is further configured to receive second sensing control information from the control device. The second sensing control information includes second beam information, the second beam information indicates a beam used to perform sensing on a sensing target, and the second beam information is different from the first beam information. The processing unit is further configured to perform sensing on the sensing target based on the second beam information.

With reference to the fifth/sixth aspect, in some implementations of the fifth/sixth aspect, the transceiver unit is further configured to receive second sensing control information from the control device. The second sensing control information includes information indicating a sensing target. The processing unit is further configured to: determine second beam information based on the information indicating the sensing target, where the second beam information indicates a beam used to perform sensing on the sensing target, and the second beam information is different from the first beam information; and perform sensing on the sensing target based on the second beam information.

With reference to the fifth/sixth aspect, in some implementations of the fifth/sixth aspect, the processing unit is further configured to: obtain, based on first sensing data, information indicating a sensing target, where the first sensing data is sensing data obtained by the processing unit by performing sensing on the sensing object based on the first beam information; determine second beam information based on the information indicating the sensing target, where the second beam information indicates a beam used to perform sensing on the sensing target, and the second beam information is different from the first beam information; and perform sensing on the sensing target based on the second beam information.

With reference to the fifth/sixth aspect, in some implementations of the fifth/sixth aspect, the first beam information includes a first beam width, the second beam information includes a second beam width, and that the second beam information is different from the first beam information includes that the second beam width is less than the first beam width.

According to a seventh aspect, an embodiment of this application provides an electronic device. The electronic device includes a processor. The processor is coupled to a memory, and may be configured to execute a computer program or instructions in the memory, to implement the method according to any one of the first aspect to the third aspect or the possible implementations thereof. Optionally, the electronic device further includes the memory. Optionally, the electronic device further includes a communication interface, and the processor is coupled to the communication interface.

According to an eighth aspect, an embodiment of this application provides a computer-readable storage medium. The computer-readable storage medium stores a computer program or instructions. When the computer program or the instructions are executed, the method according to any one of the first aspect to the third aspect or the possible implementations thereof is implemented.

According to a ninth aspect, an embodiment of this application provides a computer program product. The computer program product includes a computer program or instructions. When the computer program or the instructions are executed, the method according to any one of the first aspect to the third aspect or the possible implementations thereof is implemented.

According to a tenth aspect, an embodiment of this application provides a chip. The chip includes a processor. The processor is configured to execute a computer program or instructions. When the processor executes the computer program or the instructions, the chip is enabled to perform the method according to any one of the first aspect to the third aspect or the possible implementations thereof. Optionally, the chip further includes a communication interface, and the communication interface is configured to receive a signal or send a signal.

According to an eleventh aspect, an embodiment of this application provides a system. The system includes the apparatus according to any one of the fourth aspect or the possible implementations of the fourth aspect and the apparatus according to any one of the fifth/sixth aspect or the possible implementations of the fifth/sixth aspect.

According to a twelfth aspect, an embodiment of this application provides a system. The system includes a control device and a first sensing device. The control device is configured to perform the method according to any one of the first aspect or the possible implementations of the first aspect, and the first sensing device is configured to perform the method according to any one of the second/third aspect or the possible implementations of the second/third aspect.

For beneficial effects brought by the fourth aspect to the twelfth aspect, refer to the descriptions of the beneficial effects in the first aspect to the third aspect. Details are not described herein again.

In addition, in a process of performing the method according to any one of the first aspect to the third aspect and the possible implementations thereof, a process of sending information and/or a process of receiving information in the foregoing method may be understood as a process in which a processor outputs information and/or a process in which the processor receives input information. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmitting, sending, and receiving related to the processor may be more generally understood as operations such as outputting, receiving, and inputting of the processor, unless otherwise specified, or provided that the operations do not contradict actual functions or internal logic of the operations in related descriptions.

Optionally, in a process of performing the method according to any one of the first aspect to the third aspect and the possible implementations thereof, the processor may be a processor specially configured to perform the method, or may be a processor that performs the method by executing computer instructions in a memory, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

### BRIEF DESCRIPTION OF DRAWINGS

To describe technical solutions in embodiments of this application more clearly, the following briefly describes accompanying drawings used in describing embodiments of this application. It is clear that the accompanying drawings in the following descriptions show merely some embodiments of this application, and a person of ordinary skill in the art may derive other drawings from these accompanying drawings without creative efforts.
FIG. 1 is a diagram of a network architecture according to an embodiment of this application;
FIG. 2 is an interaction flowchart of a sensing method according to an embodiment of this application;
FIG. 3 is an interaction flowchart of another sensing method according to an embodiment of this application;
FIG. 4 is an interaction flowchart of another sensing method according to an embodiment of this application;
FIG. 5 is an interaction flowchart of another sensing method according to an embodiment of this application;
FIG. 6 is an interaction flowchart of a sensing method according to an embodiment of this application;
FIG. 7 is an interaction flowchart of another sensing method according to an embodiment of this application;
FIG. 8 is a diagram of a structure of a sensing apparatus according to an embodiment of this application;
FIG. 9 is a diagram of a structure of an electronic device according to an embodiment of this application; and
FIG. 10 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

In this application, a word such as "example" or "for example" is used to represent giving an example, an illustration, or a description. Any embodiment or design scheme described as an "example" or "for example" in this application should not be explained as being more preferred or advantageous than another embodiment or design scheme. To be precise, use of the word such as "example" or "for example" is intended to present a relative concept in a specific manner.

Terms such as "first" and "second" mentioned in embodiments of this application are used to distinguish between different objects, but are not used to describe a specific order or quantity. In addition, "first", "second", and the like are not limited to being definitely different. In addition, terms "include" and "have" and any other variant thereof are intended to cover a non-exclusive inclusion. For example, a process, method, system, product, device, or the like that includes a series of steps or units is not limited to the listed steps or units, but optionally further includes steps, units, or the like not listed, or optionally further includes other steps or units inherent to the process, method, product, device, or the like.

Reference to "embodiment" in the specification means that specific features, structures, or characteristics described in combination with the embodiment may be included in at least one embodiment of this application. The phrase shown at various positions in the specification may not necessarily refer to a same embodiment, nor an independent or optional embodiment exclusive from another embodiment. A person skilled in the art may explicitly and implicitly understand that, in embodiments of this application, unless otherwise specified or a logical conflict occurs, terms and/or descriptions in embodiments are consistent and may be referenced by each other, and technical features in different embodiments may be combined to form a new embodiment based on an internal logical relationship.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates that the associated objects are in an "or" relationship. The expression "at least one of the following items (pieces)" or a similar expression means any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural.

In descriptions of this application, "indicate" may include direct indication and indirect indication, and may include explicit indication and implicit indication. Information indicated by a piece of information is referred to as to-be-indicated information. In a specific implementation process, there are many manners for indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, where there is an association relationship between the indicated other information and the to-be-indicated information. For another example, only a part of the to-be-indicated information may be indicated, while another part of the to-be-indicated information is already known or pre-agreed on. In addition, specific information may be indicated by using an arrangement sequence, agreed on in advance (for example, stipulated in a protocol), of pieces of information, to reduce indication overheads to some extent.

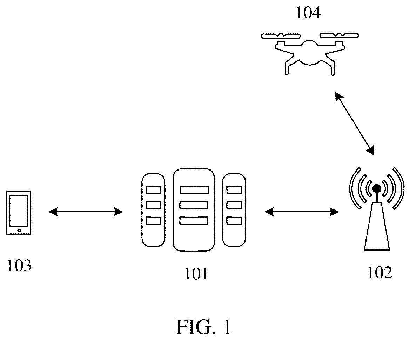

FIG. 1 is a diagram of a network architecture according to an embodiment of this application, including a control device 101 and a sensing device 102. There may be one or more sensing devices 102. Optionally, the network architecture further includes a requesting device 103. The control device 101 may communicate with the sensing device 102, to control the sensing device 102 to perform sensing on a sensing object 104. The requesting device 103 may communicate with the control device 101, to initiate a sensing request for the sensing object 104 to the control device 101.

The control device 101 may be a functional network element in a network, for example, a sensing control network element (sensing function, SF), or may be a chip or a circuit in an access network device or a core network device, or may be a logical module or software that can implement all or a part of functions of an access network device or a core network device. This is not limited in this application. The control device 101 may include one or more of the following capabilities: sensing data processing, sensing result analysis, sensing type/mode determining, sensing device determining, and physical sensing resource configuration.

The sensing device 102 may be an access network device, for example, a radio access network (radio access network, RAN) node, or may be a terminal device, or may be a chip or a circuit in an access network device or a terminal device, or may be a logical module or software that can implement all or a part of functions of a terminal device or a network device. This is not limited in this application. The sensing device 102 may include one or more of the following capabilities: sensing measurement, sensing data processing, sensing result analysis, and sensing type/mode determining.

The requesting device 103 may be a functional network element in a network, for example, an access and mobility management network element (access and mobility management function, AMF) or an application function network element (application function, AF), or may be a terminal device.

In the foregoing descriptions, the access network device includes but is not limited to a base station, a next generation NodeB (next generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), a server, a wearable device, a vehicle-mounted device, an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; or may be a gNB, a TRP, or a TP in a 5G system, for example, a new radio (new radio, NR) system, or an antenna panel or a group of antenna panels of a base station in the 5G system; or may be a network node constituting a gNB or a transmission point, for example, a baseband unit (BBU) or a distributed unit (distributed unit, DU). The base station may be a macro base station, a micro base station, a picocell base station, a small cell, a relay station, a balloon station, or the like.

In some deployments, a gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, implementing functions of a radio resource control (radio resource control, RRC) layer and a packet data convergence protocol (packet data convergence protocol, PDCP) layer. The DU is responsible for processing a physical layer protocol and a real-time service, implementing functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is generated by the CU and finally encapsulated at the PHY layer of the DU into information at the PHY layer, or is converted from information at the PHY layer. Therefore, in this architecture, higher layer signaling, for example, RRC layer signaling, may also be considered as being sent by the DU, or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

The terminal device may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing voice/data connectivity to a user), for example, a handheld device or a vehicle-mounted device having a wireless connection function. The terminal device in embodiments of this application may be a mobile phone (mobile phone), a tablet computer (pad), a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, a vehicle device, a vehicle-mounted module, or a vehicle) in the internet of vehicles, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal in a 5th generation (5th generation, 5G) network, a terminal in a future evolved network, or the like.

It should be understood that the foregoing network architecture shown in FIG. 1 is an example for description, and a network architecture suitable for embodiments of this application is not limited thereto. Any network architecture that can implement functions of a part or all of the foregoing devices is applicable to embodiments of this application. A sensing method provided in embodiments of this application may relate to only a part of devices shown in FIG. 1, and may relate to a device not shown in FIG. 1. This is not limited in this application.

The following three sensing modes are described by using an example in which the sensing device is a base station: sensing based on transmitting and receiving of the base station, sensing based on transmitting of one base station and receiving of another base station, and sensing based on transmitting of UE and receiving of the base station.
(1) Sensing based on transmitting and receiving of the base station: A remote radio unit (remote radio unit, RRU) of the base station or the base station (base station, BS) performs sensing by using a reflected/diffracted signal of a communication signal transmitted by the remote radio unit or the base station. This sensing mode is applicable to a system in which a sensing receiver and a sensing transmitter are jointly deployed at a same position, such as a single-station radar, where the base station needs to have a full-duplex capability or an equivalent capability. The BS can sense information about an environment around the BS through sensing based on transmitting and receiving of the base station. Because the transmitter and the receiver are on a same platform, they can be easily synchronized in clock, and a sensing result can be clearly parsed by the single base station node without assistance of an external device.
(2) Sensing based on transmitting of one base station and receiving of another base station: One RRU performs sensing by using a downlink communication signal received from another RRU. This sensing mode is applicable to a bistatic or multistatic radar, where a transmitter and a receiver are spatially separated, but need to be synchronized in clock.
(3) Sensing based on transmitting of UE and receiving of the base station: The base station performs sensing by using an uplink communication signal sent from the UE transmitter. This sensing mode is similar to sensing based on transmitting of one base station and receiving of another base station, where the transmitter and the receiver are spatially separated, but are not synchronized. In sensing based on transmitting of UE and receiving of the base station, the receiver fully learns of a system protocol, a signal structure, and sensing signal sending time. Therefore, uplink sensing can be directly implemented without changing hardware or network settings, and no full-duplex operation is needed. In a sensing process, a relative time delay and Doppler frequency are estimated, rather than an absolute time delay and Doppler frequency. Due to spatial separation between clocks/oscillators, there is usually a deviation between the UE transmitter and the BS receiver. Ambiguity of a sensing amount caused by the clock deviation between the transmitter and the receiver may be resolved by using a related algorithm and technology.

Optionally, the sensing device may alternatively be UE. For example, the sensing device is UE, and a sensing mode may be sensing based on transmitting of a base station and receiving of the UE, where the UE performs sensing by using a downlink communication signal sent from the base station transmitter.

The following describes the sensing method provided in embodiments of this application.

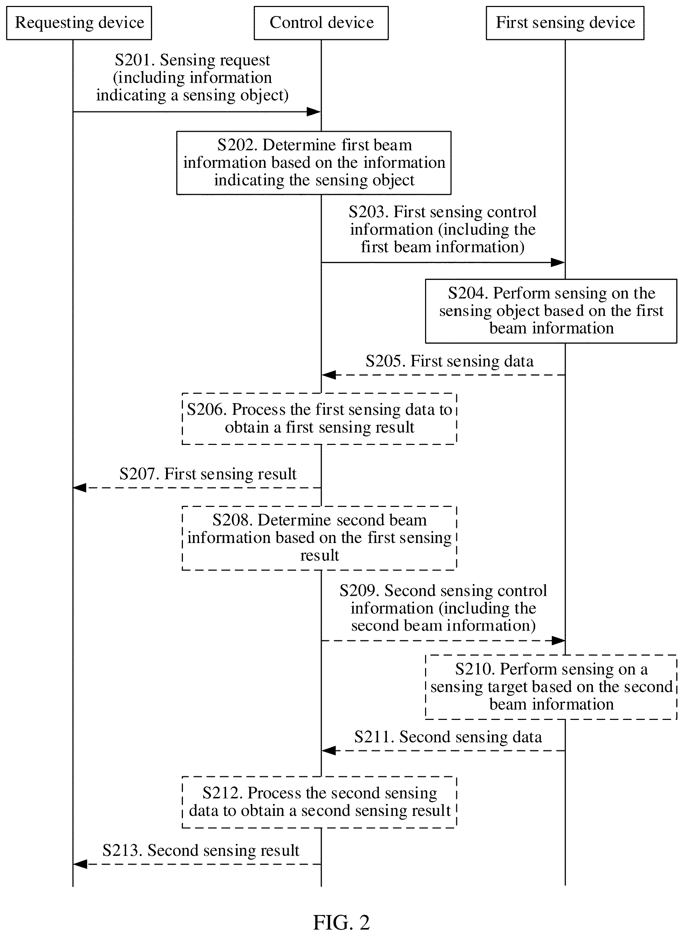

FIG. 2 is an interaction flowchart of a sensing method according to an embodiment of this application. The sensing method shown in FIG. 2 includes the following step S201 to step S204.

S201. A requesting device sends a sensing request to a control device. Correspondingly, the control device receives the sensing request from the requesting device.

The sensing request is used to request to perform a sensing operation on a sensing object. The sensing request includes information indicating the sensing object, and the sensing object is an object on which the sensing operation is performed. For example, the sensing object may be an area, or may be a specific substance.

In an embodiment, the information indicating the sensing object includes an identifier of the sensing object. The identifier is information that can represent an identity of the sensing object. The sensing object to be sensed may be determined by using the identifier. For example, the identifier of the sensing object may be a name or a geographical location of the sensing object, or may be other information that can locate the sensing object, for example, an identity (id) configured for the sensing object.

In another embodiment, the information indicating the sensing object includes sensing area information. The sensing area information indicates a sensing area. In this case, the sensing object is the sensing area. The sensing area herein may be understood as an area with a specific range, for example, a residential area, a park area, or a high-speed railway area. The sensing area to be sensed may be determined by using the sensing area information. For example, the sensing area information may include a name or a geographical location of the sensing area, and may further include the range of the sensing area or a requested sensing range.

In still another embodiment, the information indicating the sensing object includes sensing location information. The sensing location information indicates a sensing target. In this case, the sensing object is the sensing target. The sensing target herein may be understood as a specific substance, and may be a static substance, for example, a traffic light, or may be a dynamic substance, for example, an uncrewed aerial vehicle. The sensing target to be sensed may be determined by using the sensing location information. For example, the sensing location information may include a geographical location of the sensing target, and may further include a size of the sensing target or a requested sensing range.

S202. The control device determines first beam information based on the information indicating the sensing object.

After receiving the sensing request, the control device obtains, from the sensing request, the information indicating the sensing object, and determines the first beam information based on the information indicating the sensing object.

The first beam information indicates a beam used to perform sensing on the sensing object. The first beam information determined by the control device based on the information indicating the sensing object may be understood as adaptive to the sensing object. First beam information corresponding to different sensing objects may be the same or may be different.

In an embodiment, the first beam information includes a beam width. The beam width refers to an included angle between two directions where radiation power decreases by 3 dB on two sides of a maximum radiation direction.

In a possible implementation, the control device determines, based on the information indicating the sensing object, an object type to which the sensing object belongs, and then obtains, based on the object type to which the sensing object belongs and a mapping relationship between an object type and a beam width, the beam width used to perform sensing on the sensing object. The mapping relationship between the object type and the beam width may be predefined or preconfigured.

In a possible implementation, the control device may obtain a size of the sensing object based on the information indicating the sensing object, and then determine, based on the size of the sensing object, the object type to which the sensing object belongs. It should be understood that, if the sensing object is a sensing area, the size of the sensing object may be a range size of the sensing area. If the sensing object is a sensing target, the size of the sensing object may be a size of the sensing target.

In an example, a classification threshold may be set to classify sensing objects into two object types: a first sensing object and a second sensing object. A size of the first sensing object is greater than or equal to the classification threshold, and a size of the second sensing object is less than the classification threshold. Different object types correspond to different beam widths. For example, the first sensing object corresponds to a wide beam, and a width of the wide beam may be a specific width, or may be a width range. The second sensing object corresponds to a narrow beam, and a width of the narrow beam may be a specific width, or may be a width range. The width of the wide beam is greater than the width of the narrow beam.

In this way, after obtaining the size of the sensing object, the control device may compare the size of the sensing object with the classification threshold. If the size of the sensing object is greater than or equal to the classification threshold, the control device determines that the object type to which the sensing object belongs is the first sensing object, and then determines that the beam used to perform sensing on the sensing object is a wide beam. If the size of the sensing object is less than the classification threshold, the control device determines that the object type to which the sensing object belongs is the second sensing object, and then determines that the beam used to perform sensing on the sensing object is a narrow beam.

It should be understood that the foregoing two object types are merely an example. In another example, the sensing objects may alternatively be classified into more object types. For example, the sensing objects are classified into three object types: a first sensing object, a second sensing object, and a third sensing object. A size of the first sensing object is within a first preset range, a size of the second sensing object is within a second preset range, and a size of the third sensing object is within a third preset range. This is not limited in this application.

In a possible implementation, the information indicating the sensing object may further include object type indication information, to indicate the object type to which the sensing object belongs. The control device may determine, based on the object type indication information, the object type to which the sensing object belongs.

In an example, the object type indication information may indicate two object types: a sensing area and a sensing target. Different object types correspond to different beam widths. For example, the sensing area corresponds to a wide beam, and a width of the wide beam may be a specific width, or may be a width range. The sensing target corresponds to a narrow beam, and a width of the narrow beam may be a specific width, or may be a width range. The width of the wide beam is greater than the width of the narrow beam.

In this way, after obtaining the information indicating the sensing object, the control device may identify the object type indication information in the information. If the object type indication information indicates the sensing area, the control device determines that the object type to which the sensing object belongs is the sensing area, and then determines that the beam used to perform sensing on the sensing object is a wide beam. If the size of the sensing object is less than the classification threshold, the control device determines that the object type to which the sensing object belongs is the second sensing object, and then determines that the beam used to perform sensing on the sensing object is a narrow beam.

It should be understood that the foregoing two object types are merely an example. In another example, the object type indication information may alternatively indicate more object types. For example, the object type indication information may indicate four object types: a first sensing area, a second sensing area, a first sensing target, and a second sensing target. This is not limited in this application.

In an embodiment, the first beam information further includes a beam direction. The control device may obtain a location of the sensing object based on the information indicating the sensing object, and then determine the beam direction based on the location of the sensing object, so that a range of the beam can cover the sensing object.

S203. The control device sends first sensing control information to a first sensing device. Correspondingly, the first sensing device receives the first sensing control information from the control device.

The first sensing control information includes the first beam information. The first sensing control information is used to indicate the first sensing device to perform sensing on the sensing object based on the first beam information. The first sensing device is a device that can perform sensing on the sensing object. It should be understood that a signal of the first sensing device can cover the sensing object.

Before sending the first sensing control information to the first sensing device, the control device may first determine the first sensing device. Specifically, each sensing device in a network may be used as a candidate sensing device, and the control device may select, from all the candidate sensing devices, a device that can perform sensing on the sensing object as the first sensing device.

In a possible implementation, each candidate sensing device may report sensing capability information to the control device. The sensing capability information includes information indicating an area that can be sensed by the candidate sensing device, and the area that can be sensed by the candidate sensing device may also be understood as a signal coverage area of the candidate sensing device. The control device may obtain the location of the sensing object based on the information indicating the sensing object, and then determine candidate sensing devices whose signal coverage areas include the location of the sensing object, and then select one from these candidate sensing devices as the first sensing device.

Optionally, the sensing capability information may further include information indicating a beam supported by the candidate sensing device. After determining the candidate sensing devices whose signal coverage areas include the location of the sensing object, the control device may further determine candidate sensing devices supporting a beam that can meet a requirement of the first beam information in these candidate sensing devices, and then select one from the candidate sensing devices that meet the requirement as the first sensing device.

In an embodiment, the first sensing control information further includes a sensing type, and the sensing type indicates a sensing type used to perform sensing on the sensing object. Correspondingly, the first sensing control information further indicates the first sensing device to perform sensing on the sensing object based on the sensing type. For example, the sensing type may be sweeping sensing or tracking sensing. The sweeping sensing is a process of continuously sending a sensing signal for a specific area range to obtain a physical feature parameter of the area. The tracking sensing is a process of performing sensing measurement on a specific target substance.

In a possible implementation, the sensing type is related to the size of the sensing object. After obtaining the size of the sensing object, the control device may determine, based on the size of the sensing object and a mapping relationship between an object size and a sensing type, the sensing type used to perform sensing on the sensing object. The mapping relationship between the object size and the sensing type may be predefined or preconfigured.

For example, a size threshold may be set. If the object size is greater than or equal to the size threshold, the sensing type corresponding to the object size is sweeping sensing. If the object size is less than the size threshold, the sensing type corresponding to the object size is tracking sensing.

In this way, after obtaining the size of the sensing object, the control device may compare the size of the sensing object with the size threshold. If the size of the sensing object is greater than or equal to the size threshold, the control device determines that the sensing type used to perform sensing on the sensing object is sweeping sensing. If the size of the sensing object is less than the size threshold, the control device determines that the sensing type used to perform sensing on the sensing object is tracking sensing.

In a possible implementation, the sensing type is related to the object type to which the sensing object belongs. After determining the object type to which the sensing object belongs, the control device may determine, based on the object type to which the sensing object belongs and a mapping relationship between an object type and a sensing type, the sensing type used to perform sensing on the sensing object. The mapping relationship between the object type and the sensing type may be predefined or preconfigured.

For example, a sensing type corresponding to the sensing area is sweeping sensing, and a sensing type corresponding to the sensing target is tracking sensing. In this way, if the object type to which the sensing object belongs is the sensing area, the control device determines that the sensing type used to perform sensing on the sensing object is sweeping sensing. If the object type to which the sensing object belongs is the sensing target, the control device determines that the sensing type used to perform sensing on the sensing object is tracking sensing.

In a possible implementation, the sensing type is related to the first beam information. After determining the first beam information, the control device may obtain, based on the first beam information and a mapping relationship between beam information and a sensing type, the sensing type used to perform sensing on the sensing object. The mapping relationship between the beam information and the sensing type may be predefined or preconfigured.

For example, a width threshold may be set. If the beam width indicated by the beam information is greater than or equal to the width threshold, the sensing type corresponding to the beam information is sweeping sensing. If the beam width indicated by the beam information is less than the width threshold, the sensing type corresponding to the beam information is tracking sensing.

In this way, after determining the first beam information, the control device may compare the beam width indicated by the first beam information with the width threshold. If the beam width indicated by the first beam information is greater than or equal to the width threshold, the control device determines that the sensing type used to perform sensing on the sensing object is sweeping sensing. If the beam width indicated by the first beam information is less than the width threshold, the control device determines that the sensing type used to perform sensing on the sensing object is tracking sensing.

In an embodiment, the first sensing control information further includes sensing precision information. The sensing precision information indicates precision required for performing sensing on the sensing object, for example, a resolution, a refresh rate, a probability that no substance is detected, or a misreporting rate. Correspondingly, the first sensing control information further indicates the first sensing device to perform sensing on the sensing object based on the sensing precision information.

In a possible implementation, the sensing precision information may be determined by the control device. Specifically, the control device may determine, based on the information indicating the sensing object, the precision required for performing sensing on the sensing object.

In a possible implementation, the sensing precision information is related to the size of the sensing object. The control device may obtain the size of the sensing object based on the information indicating the sensing object, and then determine, based on the size of the sensing object and a mapping relationship between an object size and sensing precision information, the precision required for performing sensing on the sensing object. The mapping relationship between the object size and the sensing precision information may be predefined or preconfigured.

For example, a larger size of the sensing object may indicate lower precision indicated by corresponding sensing precision information; and a smaller size of the sensing object may indicate higher precision indicated by corresponding sensing precision information.

In a possible implementation, the sensing precision information is related to the object type to which the sensing object belongs. The control device may obtain, based on the information indicating the sensing object, the object type to which the sensing object belongs, and then determine, based on the object type to which the sensing object belongs and a mapping relationship between an object type and sensing precision information, the precision required for performing sensing on the sensing object. The mapping relationship between the object type and the sensing precision information may be predefined or preconfigured.

For example, if the object type to which the sensing object belongs is the sensing area, the precision indicated by the corresponding sensing precision information may be lower. If the object type to which the sensing object belongs is the sensing target, the required sensing precision may be higher.

In a possible implementation, the sensing precision information may be determined by a requester. Specifically, the requester may determine the sensing precision information based on a service requirement, include the sensing precision information into the sensing request, and send the sensing request to the control device, so that the control device can directly obtain the sensing precision information from the sensing request.

In an embodiment, the first sensing control information further includes sensing time information. The sensing time information indicates time at which sensing is performed on the sensing object, for example, a time point or a time period at which sensing is performed on the sensing object. Correspondingly, the first sensing control information further indicates the first sensing device to perform sensing on the sensing object based on the sensing time information.

In a possible implementation, the sensing time information may be determined by the control device. For example, the control device may indicate that the time at which the first sensing device performs sensing on the sensing object is within preset duration after the control device sends the first sensing control information.

In a possible implementation, the sensing time information may be determined by the requester. Specifically, the requester may determine the sensing time information based on a service requirement, include the sensing time information into the sensing request, and send the sensing request to the control device, so that the control device can directly obtain the sensing time information from the sensing request.

It may be understood that information included in the first sensing control information is not limited to the information described in the foregoing embodiment. In another embodiment, the first sensing control information may further include more information. For example, the first sensing control information further includes sensing signal configuration information, such as a signal frequency and signal strength. This is not limited in this application.

S204. The first sensing device performs sensing on the sensing object based on the first beam information.

After receiving the first sensing control information, the first sensing device obtains the first beam information from the first sensing control information, and performs sensing on the sensing object based on the first beam information.

It may be understood that, when the first sensing control information further includes the sensing type, and/or the sensing precision information, and/or the sensing time information, correspondingly, the first sensing device further performs sensing on the sensing object based on the sensing type, and/or the sensing precision information, and/or the sensing time information.

In the foregoing embodiment, the control device determines, based on the information indicating the sensing object, the first beam information indicating the beam used to perform sensing on the sensing object, and the control device sends the first sensing control information including the first beam information to the first sensing device, so that the first sensing device performs sensing on the sensing object based on the first beam information. Because the first beam information is dynamically determined for the sensing object, and is adaptive to the sensing object, it may be considered that when the first sensing device performs sensing on the sensing object based on the first beam information, a used sensing resource is adaptive to a sensing resource actually required by the sensing object. This helps to avoid unnecessary sensing resource waste and improve sensing resource utilization.

In addition, the first beam information may further reflect sensing precision. For example, if the beam width indicated by the first beam information is narrower, that is, the beam is more focused, and a signal that can be generated is stronger, it may be considered that sensing precision that can be implemented is higher. For another example, if the beam width indicated by the first beam information is wider, that is, the beam is more divergent, and a signal that can be generated is weaker, it may be considered that sensing precision that can be implemented is higher. Therefore, it may be considered that when the first sensing device performs sensing on the sensing object based on the first beam information, implemented sensing precision is also adaptive to sensing precision actually required by the sensing object. This helps to resolve a problem of limited sensing precision and meet diversified sensing precision requirements.

Optionally, the sensing method shown in FIG. 2 further includes the following step S205 to step S207.

S205. The first sensing device sends first sensing data to the control device. Correspondingly, the control device receives the first sensing data from the first sensing device.

The first sensing data is sensing data obtained by the first sensing device by performing sensing on the sensing object based on the first beam information. Specifically, the first sensing device transmits radio signal data for the sensing object based on the first beam information, and receives reflected radio signal data, to obtain the first sensing data.

S206. The control device processes the first sensing data to obtain a first sensing result.

The first sensing data includes physical feature parameters of a radio signal, and that the control device processes the first sensing data may be specifically identifying these physical feature parameters to obtain the first sensing result.

In an example, the sensing object is a sensing area. The control device may identify whether these physical feature parameters represent a specific substance (that is, a sensing target), and the first sensing result obtained accordingly may reflect a situation of a sensing target in the sensing area.

For example, if it is identified that these physical feature parameters represent a sensing target, it may be considered that the sensing target exists in the sensing area, and correspondingly, the first sensing result indicates that the sensing target is detected. The first sensing result includes information indicating the sensing target, and the information indicating the sensing target may include information indicating that the sensing target is detected, and may further include information such as a target type, attribute, location, and size of the sensing target.

For another example, if it is identified that these physical feature parameters cannot represent a sensing target, it may be considered that no sensing target exists in the sensing area, and correspondingly, the first sensing result indicates that no sensing target is detected.

In another example, the sensing object is a sensing target. The control device may identify status information of the sensing target based on these physical feature parameters, and the first sensing result obtained accordingly may reflect a status change of the sensing target. For example, the sensing target is an uncrewed aerial vehicle, and correspondingly, the first sensing result may indicate a moving trajectory of the uncrewed aerial vehicle.

S207. The control device sends the first sensing result to the requesting device. Correspondingly, the requesting device receives the first sensing result from the control device.

After obtaining the first sensing result, the control device sends the first sensing result to the requesting device, so that the requester can learn of the sensing result about the sensing object in time.

Optionally, the sensing method shown in FIG. 2 further includes the following step S208 to step S210.

S208. The control device determines second beam information based on the first sensing result.

In an embodiment, the sensing object is a sensing area (denoted as X), and the first sensing device performs sensing on the sensing area X based on the first beam information, to obtain the first sensing data. The control device processes the first sensing data to obtain the first sensing result. When the first sensing result indicates that a sensing target (denoted as Z) is detected in the sensing area X, the control device determines the second beam information based on the first sensing result.

The second beam information indicates a beam used to perform sensing on the sensing target Z. The second beam information is different from the first beam information.

In an embodiment, the first beam information includes a first beam width (denoted as W1). The first beam width W1 is a beam width used to perform sensing on the sensing area X. The second beam information includes a second beam width (denoted as W2). The second beam width W2 is a beam width used to perform sensing on the sensing target Z. The second beam width W2 is less than the first beam width W1.

In this way, when the sensing target is detected in the sensing area, the control device supports adjustment of the beam width. With the beam width reduced, the beam can be more focused, and a stronger sensing signal can be generated, so that higher-precision sensing can be indicated to be performed subsequently on the sensing target, and different precision requirements from area sensing to specific target sensing can be met.

The first sensing result includes the information indicating the sensing target, and that the control device determines the second beam information based on the first sensing result may be specifically determining the second beam information based on the information indicating the sensing target. The second beam information determined by the control device based on the information indicating the sensing target may be understood as adaptive to the sensing target. Second beam information corresponding to different sensing targets may be the same or may be different.

In a possible implementation, the control device may obtain, based on the information indicating the sensing target, the target type to which the sensing target belongs, and then obtain, based on the target type to which the sensing target belongs and a mapping relationship between a target type and a beam width, the beam width used to perform sensing on the sensing target. The mapping relationship between the target type and the beam width may be predefined or preconfigured.

In an example, the target type may be used to represent a specific substance. For example, if the sensing target is specifically an uncrewed aerial vehicle, the target type to which the sensing target belongs is an uncrewed aerial vehicle. Beam widths corresponding to different target types may be the same or may be different.

It should be understood that the target type may alternatively be determined in another manner. This is not limited in this application. For example, the target type may alternatively be determined based on a size of the sensing target. For example, if the size of the sensing target is within a preset first size range, the target type to which the sensing target belongs is a first target type. If the size of the sensing target is within a preset second size range, the target type to which the sensing target belongs is a second target type.

In an embodiment, the second beam information further includes a beam direction. The control device may obtain a location of the sensing target based on the information indicating the sensing target, and then determine the beam direction based on the location of the sensing target, so that a range of the beam can cover the sensing target.

S209. The control device sends second sensing control information to the first sensing device. Correspondingly, the first sensing device receives the second sensing control information from the control device.

The second sensing control information includes the second beam information. The second sensing control information indicates the first sensing device to perform sensing on the sensing target based on the second beam information.

In an embodiment, the second sensing control information further includes a sensing type, and the sensing type indicates a sensing type used to perform sensing on the sensing target. Correspondingly, the second sensing control information further indicates the first sensing device to perform sensing on the sensing target based on the sensing type.

In a possible implementation, the sensing type in the first sensing control information is sweeping sensing, and the sensing type in the second sensing control information is tracking sensing.

In this way, when the sensing target is detected in the sensing area, the control device further supports adjustment of the sensing type. With the sensing type adjusted from sweeping sensing to tracking sensing, the control device may indicate to track the target after the target is detected, so that a service requirement of target intrusion detection and tracking within a specific area range can be met.

In an embodiment, the second sensing control information further includes sensing precision information. The sensing precision information indicates precision required for performing sensing on the sensing target, for example, a resolution, a refresh rate, a probability that no substance is detected, or a misreporting rate. Correspondingly, the second sensing control information further indicates the first sensing device to perform sensing on the sensing target based on the sensing precision information.

In an embodiment, the second sensing control information further includes sensing time information. The sensing time information indicates time at which sensing is performed on the sensing target, for example, a time point or a time period at which sensing is performed on the sensing target. Correspondingly, the second sensing control information further indicates the first sensing device to perform sensing on the sensing target based on the sensing time information.

It should be understood that for specific descriptions of the sensing time information and the sensing time information, refer to related descriptions in the foregoing embodiment. Details are not described herein again.

S210. The first sensing device performs sensing on the sensing target based on the second beam information.

After receiving the second sensing control information, the first sensing device obtains the second beam information from the second sensing control information, and performs sensing on the sensing target based on the second beam information.

It may be understood that, when the second sensing control information further includes the sensing type, and/or the sensing precision information, and/or the sensing time information, correspondingly, the first sensing device further performs sensing on the sensing target based on the sensing type, and/or the sensing precision information, and/or the sensing time information.

Optionally, the sensing method shown in FIG. 2 further includes the following step S211 to step S213.

S211. The first sensing device sends second sensing data to the control device. Correspondingly, the control device receives the second sensing data from the first sensing device.

The second sensing data is sensing data obtained by the first sensing device by performing sensing on the sensing target based on the second beam information. Specifically, the first sensing device transmits radio signal data for the sensing target based on the second beam information, and receives reflected radio signal data, to obtain the second sensing data.

S212. The control device processes the second sensing data to obtain a second sensing result.

The control device may identify status information of the sensing target based on the second sensing data, and the second sensing result obtained accordingly may reflect a status change of the sensing target. For example, the sensing target is an uncrewed aerial vehicle, and correspondingly, the second sensing result may indicate a moving trajectory of the uncrewed aerial vehicle. For another example, the sensing target is a traffic light, and correspondingly, the second sensing result may indicate a color change of the traffic light.

S213. The control device sends the second sensing result to the requesting device. Correspondingly, the requesting device receives the second sensing result from the control device.

After obtaining the second sensing result, the control device sends the second sensing result to the requesting device, so that the requester can learn of the sensing result about the sensing target in time.

According to the foregoing solution, the control device may first indicate the first sensing device to perform sweeping sensing within a specific area range by using a wider beam, and perform target identification on sweeping sensing data obtained by the first sensing device. When a sensing target is identified, the control device may adjust a beam width and a sensing type, and then indicate the first sensing device to perform tracking sensing on the sensing target by using a narrower beam. In this way, efficient sweeping sensing and high-precision tracking sensing can be implemented, sensing requirements in two different phases, namely, target detection and target tracking, can be met, and sensing resource utilization can be improved.

Optionally, the first sensing device is a base station, and the foregoing solution is applicable to a sensing service, for example, target intrusion detection and tracking, in a mode of sensing based on transmitting and receiving of the base station.

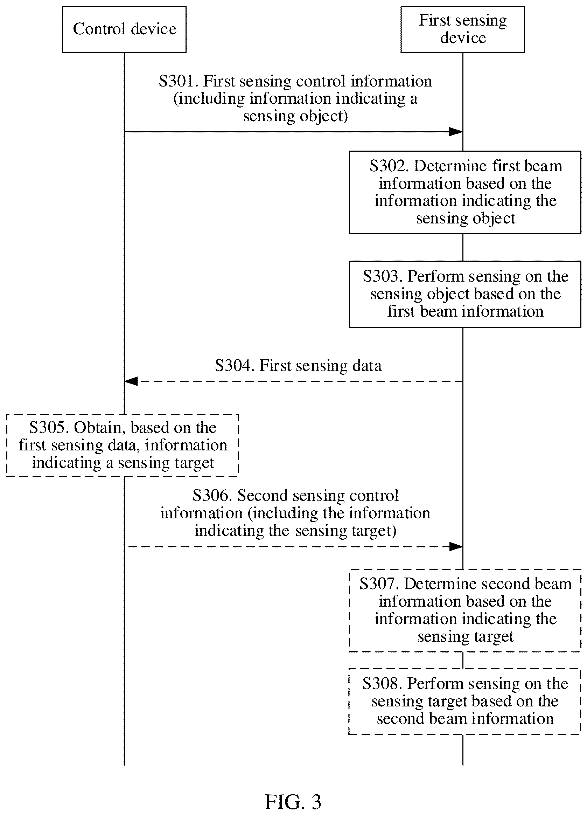

FIG. 3 is an interaction flowchart of another sensing method according to an embodiment of this application. The sensing method shown in FIG. 3 includes the following step S301 to step S303.

S301. A control device sends first sensing control information to a first sensing device. Correspondingly, the first sensing device receives the first sensing control information from the control device.

The first sensing control information includes information indicating a sensing object. Optionally, the first sensing control information further includes a sensing type, and/or sensing precision information, and/or sensing time information.

It should be understood that for specific descriptions of the information indicating the sensing object, the sensing type, the sensing precision information, and the sensing time information, refer to related descriptions in the foregoing embodiment. Details are not described herein again.

It should be noted that, an execution body for determining the sensing type, the sensing precision information, or the sensing time information is not limited to the control device or the requester described in the foregoing embodiment, and may alternatively be the first sensing device, that is, the sensing type, the sensing precision information, or the sensing time information may not be carried in the first sensing control information, but may be determined by the first sensing device after receiving the first sensing control information. For example, the first sensing device may determine the sensing type based on the information indicating the sensing object, and the first sensing device may further determine the sensing precision information or the sensing time information based on configuration or a capability of the first sensing device.

S302. The first sensing device determines first beam information based on the information indicating the sensing object.

After receiving the first sensing control information, the first sensing device obtains, from the first sensing control information, the information indicating the sensing object, and determines the first beam information based on the information indicating the sensing object.

The first beam information indicates a beam used to perform sensing on the sensing object. In this embodiment, the first sensing device determines the first beam information.

It should be understood that for specific descriptions of the first beam information, refer to related descriptions of the first beam information in the foregoing embodiment. For specific descriptions of determining the first beam information by the first sensing device, refer to related descriptions of determining the first beam information by the control device in the foregoing embodiment. Details are not described herein again.

S303. The first sensing device performs sensing on the sensing object based on the first beam information.

It may be understood that, when the first sensing control information further includes the sensing type, and/or the sensing precision information, and/or the sensing time information, or the first sensing device further determines the sensing type, and/or the sensing precision information, and/or the sensing time information, correspondingly, the first sensing device further performs sensing on the sensing object based on the sensing type, and/or the sensing precision information, and/or the sensing time information.

Optionally, the sensing method shown in FIG. 3 further includes the following step S304 to step S308.

S304. The first sensing device sends first sensing data to the control device. Correspondingly, the control device receives the first sensing data from the first sensing device.

S305. The control device obtains, based on the first sensing data, information indicating a sensing target.

In an embodiment, the sensing object is a sensing area, and the first sensing device performs sensing on the sensing area based on the first beam information, to obtain the first sensing data. The control device processes the first sensing data, to identify whether the first sensing data includes data that represents a sensing target, that is, detect whether the sensing area includes a sensing target. If the control device detects a sensing target in the sensing area, the control device may obtain information indicating the sensing target.

S306. The control device sends second sensing control information to the first sensing device. Correspondingly, the first sensing device receives the second sensing control information from the control device.

The second sensing control information includes the information indicating the sensing target. Optionally, the second sensing control information further includes a sensing type, and/or sensing precision information, and/or sensing time information.

It should be understood that for specific descriptions of the information indicating the sensing target, the sensing type, the sensing precision information, and the sensing time information, refer to related descriptions in the foregoing embodiment. Details are not described herein again.

S307. The first sensing device determines second beam information based on the information indicating the sensing target.

After receiving the second sensing control information, the first sensing device obtains the information indicating the sensing target from the second sensing control information, and determines the second beam information based on the information indicating the sensing target.

The second beam information indicates a beam used to perform sensing on the sensing target. In an embodiment, a beam width indicated by the second beam information is less than a beam width indicated by the first beam information.

In this embodiment, the first sensing device determines the second beam information. It should be understood that for specific descriptions of determining the second beam information by the first sensing device, refer to related descriptions of determining the second beam information by the control device in the foregoing embodiment. Details are not described herein again.

S308. The first sensing device performs sensing on the sensing target based on the second beam information.

It may be understood that, when the second sensing control information further includes the sensing type, and/or the sensing precision information, and/or the sensing time information, or the first sensing device further determines the sensing type, and/or the sensing precision information, and/or the sensing time information, correspondingly, the first sensing device further performs sensing on the sensing target based on the sensing type, and/or the sensing precision information, and/or the sensing time information.

According to the foregoing solution, the control device may obtain, based on the first sensing data, the information indicating the sensing target, and the first sensing device may determine the second beam information based on the information indicating the sensing target, that is, the control device and the first sensing device cooperatively determine the second beam information.

It should be understood that, in another embodiment, the control device or the first sensing device may independently determine the second beam information.

Optionally, step S305 to step S307 may be replaced with the following steps:
The control device determines the second beam information based on the first sensing data. The control device sends the second sensing control information to the first sensing device. Correspondingly, the first sensing device receives the second sensing control information from the control device. The second sensing control information includes the second beam information.

According to the foregoing solution, the control device may obtain, based on the first sensing data, the information indicating the sensing target, and determine the second beam information based on the information indicating the sensing target, that is, the control device independently determines the second beam information. After determining the second beam information, the control device includes the second beam information into the second sensing control information, and sends the second sensing control information to the first sensing device, so that the first sensing device can directly obtain the second beam information from the second sensing control information.

Optionally, step S304 to step S307 may be replaced with the following steps:
The first sensing device obtains, based on the first sensing data, the information indicating the sensing target. The first sensing device determines the second beam information based on the information indicating the sensing target.

According to the foregoing solution, the first sensing device may obtain, based on the first sensing data, the information indicating the sensing target, and determine the second beam information based on the information indicating the sensing target, that is, the first sensing device independently determines the second beam information.

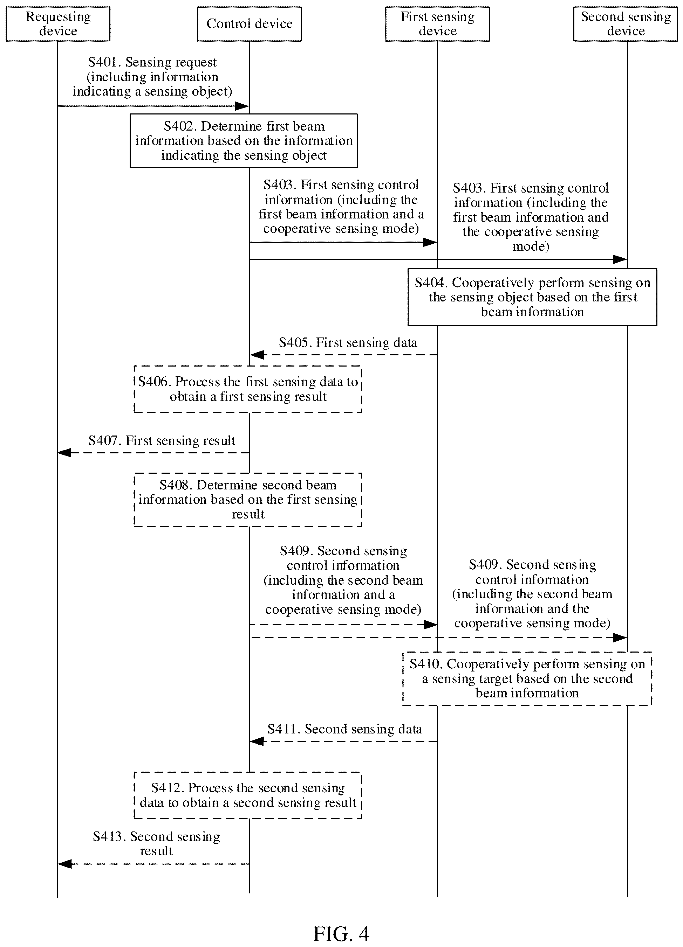

FIG. 4 is an interaction flowchart of another sensing method according to an embodiment of this application. The sensing method shown in FIG. 4 includes the following step S401 to step S404.

S401. A requesting device sends a sensing request to a control device. Correspondingly, the control device receives the sensing request from the requesting device.

S402. The control device determines first beam information based on information indicating a sensing object.

It should be understood that for specific descriptions of step S401 and step S402, correspondingly refer to related descriptions of step S201 and step S202 in the foregoing embodiment. Details are not described herein again.

S403. The control device sends first sensing control information to a first sensing device. Correspondingly, the first sensing device receives the first sensing control information from the control device. The control device sends the first sensing control information to a second sensing device. Correspondingly, the second sensing device receives the first sensing control information from the control device.

The first sensing control information includes the first beam information, and further includes a cooperative sensing mode. The first sensing control information indicates the first sensing device and the second sensing device to cooperatively perform sensing on the sensing object based on the first beam information.

The second sensing device is a device that performs sensing on the sensing object in cooperation with the first sensing device. It should be understood that a signal of the second sensing device can cover the sensing object. Before sending the first sensing control information to the second sensing device, the control device may first determine the second sensing device. It should be understood that, for specific descriptions of determining the second sensing device by the control device, refer to related descriptions of determining the second sensing device by the control device in the foregoing embodiment. Details are not described herein again.

Optionally, the cooperative sensing mode is a mutual-transmitting and mutual-receiving mode or a one-transmitting and one-receiving mode. In the mutual-transmitting and mutual-receiving mode, both the first sensing device and the second sensing device are used as transmit ends to transmit radio signals, and are also used as receive ends to receive radio signals. In the one-transmitting and one-receiving mode, one of the first sensing device and the second sensing device is used as a transmit end to transmit a radio signal, and the other is used as a receive end to receive the radio signal.

In an embodiment, the first sensing control information further includes a sensing type, and/or sensing precision information, and/or sensing time information. Correspondingly, the first sensing control information further indicates the first sensing device and the second sensing device to cooperatively perform sensing on the sensing object based on the sensing type, and/or the sensing precision information, and/or the sensing time information.

S404. The first sensing device and the second sensing device cooperatively perform sensing on the sensing object based on the first beam information.

After receiving the first sensing control information, the first sensing device and the second sensing device obtain the first beam information from the first sensing control information, and cooperatively perform sensing on the sensing object based on the first beam information.

It may be understood that, when the first sensing control information further includes the sensing type, and/or the sensing precision information, and/or the sensing time information, correspondingly, the first sensing device and the second sensing device further cooperatively perform sensing on the sensing object based on the sensing type, and/or the sensing precision information, and/or the sensing time information.

Optionally, the sensing method shown in FIG. 4 further includes the following step S405 to step S407.

S405. The first sensing device sends first sensing data to the control device. Correspondingly, the control device receives the first sensing data from the first sensing device.

S406. The control device processes the first sensing data to obtain a first sensing result.

S407. The control device sends the first sensing result to the requesting device. Correspondingly, the requesting device receives the first sensing result from the control device.

It should be understood that for specific descriptions of step S405 to step S407, correspondingly refer to related descriptions of step S205 to step S207 in the foregoing embodiment. Details are not described herein again.

Optionally, the sensing method shown in FIG. 4 further includes the following step S408 to step S410.

S408. The control device determines second beam information based on the first sensing result.

In an embodiment, the sensing object is a sensing area, the first sensing result indicates that a sensing target is detected in the sensing area, and the second beam information indicates a beam used to perform sensing on the sensing target. A beam width indicated by the second beam information is less than a beam width indicated by the first beam information.

S409. The control device sends second sensing control information to the first sensing device. Correspondingly, the first sensing device receives the second sensing control information from the control device. The control device sends the second sensing control information to the second sensing device. Correspondingly, the second sensing device receives the second sensing control information from the control device.

The second sensing control information includes the second beam information, and further includes a cooperative sensing mode. The second sensing control information indicates the first sensing device and the second sensing device to cooperatively perform sensing on the sensing target based on the second beam information.

Optionally, the second sensing control information further includes a sensing type, and/or sensing precision information, and/or sensing time information. Correspondingly, the second sensing control information further indicates the first sensing device and the second sensing device to cooperatively perform sensing on the sensing target based on the sensing type, and/or the sensing precision information, and/or the sensing time information.

In a possible implementation, the cooperative sensing mode in the first sensing control information is the mutual-transmitting and mutual-receiving mode, and the cooperative sensing mode in the second sensing control information is the one-transmitting and one-receiving mode.

In this way, when the sensing target is detected in the sensing area, the control device further supports adjustment of the cooperative sensing mode. The cooperative sensing mode is adjusted from the mutual-transmitting and mutual-receiving mode to the one-transmitting and one-receiving mode, so that sensing resource utilization can be improved.

S410. The first sensing device and the second sensing device cooperatively perform sensing on the sensing target based on the second beam information.

After receiving the second sensing control information, the first sensing device and the second sensing device obtain the second beam information from the second sensing control information, and cooperatively perform sensing on the sensing target based on the second beam information.

In an embodiment, the first sensing device is used as a receive end, and the second sensing device is used as a transmit end. The second sensing device transmits radio signal data for the sensing target based on the second beam information, and the first sensing device receives reflected radio signal data. A beam width of the transmit end is correspondingly adjusted based on an indication of the control device. A beam width of the receive end may be correspondingly adjusted based on an indication of the control device, or may not be adjusted.

It may be understood that, when the second sensing control information further includes the sensing type, and/or the sensing precision information, and/or the sensing time information, correspondingly, the first sensing device and the second sensing device further cooperatively perform sensing on the sensing target based on the sensing type, and/or the sensing precision information, and/or the sensing time information.

Optionally, the sensing method shown in FIG. 4 further includes the following step S411 to step S413.

S411. The first sensing device sends second sensing data to the control device. Correspondingly, the control device receives the second sensing data from the first sensing device.

S412. The control device processes the second sensing data to obtain a second sensing result.

S413. The control device sends the second sensing result to the requesting device. Correspondingly, the requesting device receives the second sensing result from the control device.

It should be understood that for specific descriptions of step S411 to step S413, correspondingly refer to related descriptions of step S211 to step S213 in the foregoing embodiment. Details are not described herein again.

According to the foregoing solution, the control device may first indicate the first sensing device and the second sensing device to perform mutual-transmitting and mutual-receiving sweeping sensing within a specific area range by using a wider beam, and perform target identification on sweeping sensing data obtained by the first sensing device. When a sensing target is identified, the control device may adjust a beam width, a sensing type, and a sensing mode, and then indicate the first sensing device and the second sensing device to perform one-transmitting and one-receiving tracking sensing on the sensing target by using a narrower beam. In this way, efficient sweeping sensing and high-precision tracking sensing can be implemented, sensing requirements in two different phases, namely, target detection and target tracking, can be met, and sensing resource utilization can be improved.

Optionally, both the first sensing device and the second sensing device are base stations, and the foregoing solution is applicable to a sensing service, for example, target intrusion detection and tracking, in a mode of sensing based on transmitting of one base station and receiving of another base station.

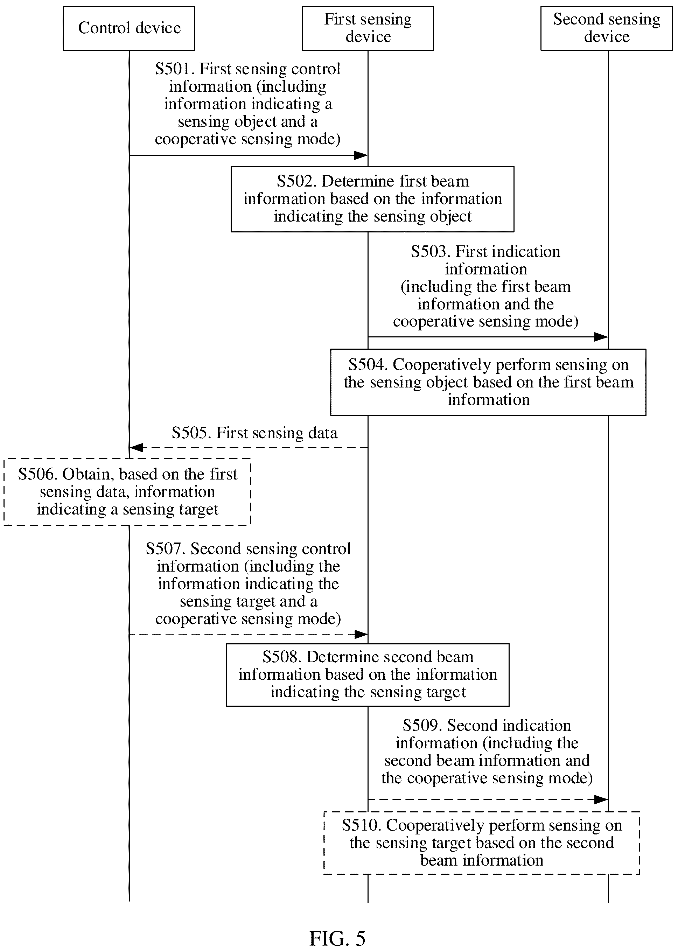

FIG. 5 is an interaction flowchart of another sensing method according to an embodiment of this application. The sensing method shown in FIG. 5 includes the following step S501 to step S504.

S501. A control device sends first sensing control information to a first sensing device. Correspondingly, the first sensing device receives the first sensing control information from the control device.

The first sensing control information includes information indicating a sensing object, and further includes a cooperative sensing mode. The first sensing control information indicates the first sensing device and a second sensing device to cooperatively perform sensing on the sensing object.

Optionally, the first sensing control information further includes a sensing type, and/or sensing precision information, and/or sensing time information. Correspondingly, the first sensing control information further indicates the first sensing device and the second sensing device to cooperatively perform sensing on the sensing object based on the sensing type, and/or the sensing precision information, and/or the sensing time information.

S502. The first sensing device determines first beam information based on the information indicating the sensing object.

It should be understood that for specific descriptions of step S502, refer to related descriptions of step S302 in the foregoing embodiment. Details are not described herein again.

S503. The first sensing device sends first indication information to the second sensing device. Correspondingly, the second sensing device receives the first indication information from the first sensing device.

The first indication information includes the first beam information and the cooperative sensing mode. The first indication information indicates the second sensing device to perform sensing on the sensing object based on the first beam information in cooperation with the first sensing device.

Optionally, the first indication information further includes a sensing type, and/or sensing precision information, and/or sensing time information. Correspondingly, the first indication information further indicates the second sensing device to perform sensing on the sensing object based on the sensing type, and/or the sensing precision information, and/or the sensing time information in cooperation with the first sensing device.

S504. The first sensing device and the second sensing device cooperatively perform sensing on the sensing object based on the first beam information.

It may be understood that, when the first sensing control information further includes the sensing type, and/or the sensing precision information, and/or the sensing time information, or the first indication information further includes the sensing type, and/or the sensing precision information, and/or the sensing time information, correspondingly, the first sensing device and the second sensing device further cooperatively perform sensing on the sensing object based on the sensing type, and/or the sensing precision information, and/or the sensing time information.

Optionally, the sensing method shown in FIG. 5 further includes the following step S505 to step S510.

S505. The first sensing device sends first sensing data to the control device. Correspondingly, the control device receives the first sensing data from the first sensing device.

S506. The control device obtains, based on the first sensing data, information indicating a sensing target.

S507. The control device sends second sensing control information to the first sensing device. Correspondingly, the first sensing device receives the second sensing control information from the control device.

The second sensing control information includes the information indicating the sensing target, and further includes a cooperative sensing mode. The second sensing control information indicates the first sensing device and the second sensing device to cooperatively perform sensing on the sensing target.

Optionally, the second sensing control information further includes a sensing type, and/or sensing precision information, and/or sensing time information. Correspondingly, the second sensing control information further indicates the first sensing device and the second sensing device to cooperatively perform sensing on the sensing object based on the sensing type, and/or the sensing precision information, and/or the sensing time information.

S508. The first sensing device determines second beam information based on the information indicating the sensing target.

S509. The first sensing device sends second indication information to the second sensing device. Correspondingly, the second sensing device receives the second indication information from the first sensing device.

The second indication information includes the second beam information and the cooperative sensing mode. The second indication information indicates the second sensing device to perform sensing on the sensing target based on the second beam information in cooperation with the first sensing device.

Optionally, the second indication information further includes a sensing type, and/or sensing precision information, and/or sensing time information. Correspondingly, the second indication information further indicates the second sensing device to perform sensing on the sensing target based on the sensing type, and/or the sensing precision information, and/or the sensing time information in cooperation with the first sensing device.

S510. The first sensing device and the second sensing device cooperatively perform sensing on the sensing target based on the second beam information.

It may be understood that, when the second sensing control information further includes the sensing type, and/or the sensing precision information, and/or the sensing time information, or the second indication information further includes the sensing type, and/or the sensing precision information, and/or the sensing time information, correspondingly, the first sensing device and the second sensing device further cooperatively perform sensing on the sensing target based on the sensing type, and/or the sensing precision information, and/or the sensing time information.

It should be understood that for specific descriptions of step S505, step S506, and step S508, refer to related descriptions of step S304, step S305, and step S307 in the foregoing embodiment. Details are not described herein again.

Optionally, step S506 to step S508 may be replaced with the following steps:
The control device determines the second beam information based on the first sensing data. The control device sends the second sensing control information to the first sensing device. Correspondingly, the first sensing device receives the second sensing control information from the control device. The second sensing control information includes the second beam information.

According to the foregoing solution, the control device may obtain, based on the first sensing data, the information indicating the sensing target, and determine the second beam information based on the information indicating the sensing target, that is, the control device independently determines the second beam information. After determining the second beam information, the control device includes the second beam information into the second sensing control information, and sends the second sensing control information to the first sensing device, so that the first sensing device can directly obtain the second beam information from the second sensing control information.

Optionally, step S505 to step S508 may be replaced with the following steps:
The first sensing device obtains, based on the first sensing data, the information indicating the sensing target. The first sensing device determines the second beam information based on the information indicating the sensing target.

According to the foregoing solution, the first sensing device may obtain, based on the first sensing data, the information indicating the sensing target, and determine the second beam information based on the information indicating the sensing target, that is, the first sensing device independently determines the second beam information.

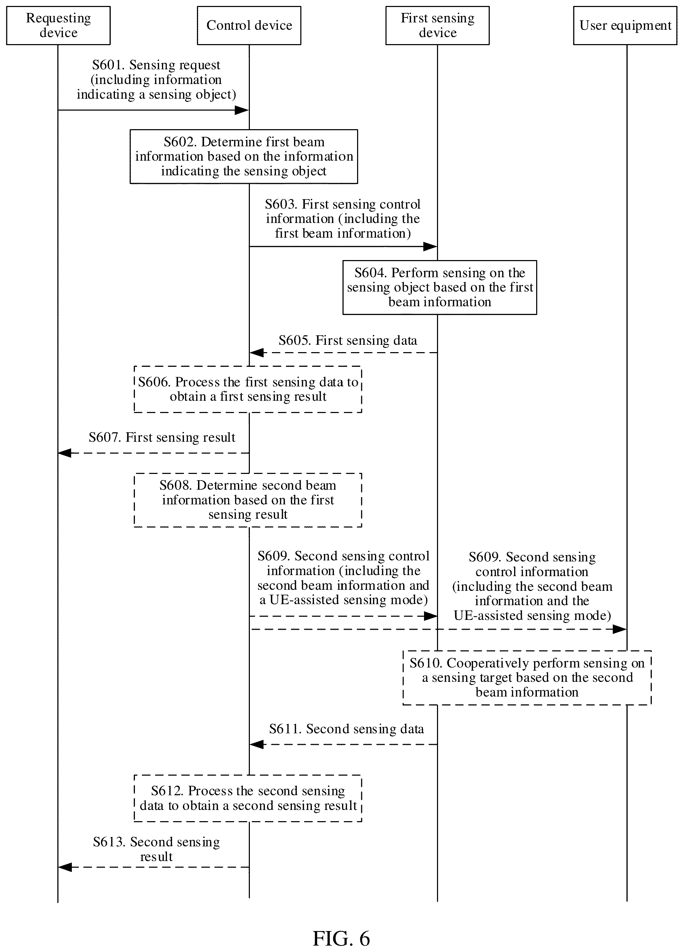

FIG. 6 is an interaction flowchart of a sensing method according to an embodiment of this application. The sensing method shown in FIG. 6 includes the following step S601 to step S613.

S601. A requesting device sends a sensing request to a control device. Correspondingly, the control device receives the sensing request from the requesting device.

S602. The control device determines first beam information based on information indicating a sensing object.

S603. The control device sends first sensing control information to a first sensing device. Correspondingly, the first sensing device receives the first sensing control information from the control device.

S604. The first sensing device performs sensing on the sensing object based on the first beam information.

S605. The first sensing device sends first sensing data to the control device. Correspondingly, the control device receives the first sensing data from the first sensing device.

S606. The control device processes the first sensing data to obtain a first sensing result.

S607. The control device sends the first sensing result to the requesting device. Correspondingly, the requesting device receives the first sensing result from the control device.

S608. The control device determines second beam information based on the first sensing result.

S609. The control device sends second sensing control information to the first sensing device. Correspondingly, the first sensing device receives the second sensing control information from the control device. The control device sends the second sensing control information to user equipment. Correspondingly, the user equipment receives the second sensing control information from the control device.

The second sensing control information includes the second beam information, and further includes a user equipment (User Equipment, UE)-assisted sensing mode. The UE-assisted sensing mode may also be understood as a cooperative sensing mode, and a second sensing device in the sensing mode is the UE. The second sensing control information indicates the first sensing device and the user equipment to cooperatively perform sensing on a sensing target based on the second beam information.

Optionally, the second sensing control information further includes a sensing type, and/or sensing precision information, and/or sensing time information. Correspondingly, the second sensing control information further indicates the first sensing device and the user equipment to cooperatively perform sensing on the sensing target based on the sensing type, and/or the sensing precision information, and/or the sensing time information.

S610. The first sensing device and the user equipment cooperatively perform sensing on the sensing target based on the second beam information.

After receiving the second sensing control information, the first sensing device and the user equipment obtain the second beam information from the second sensing control information, and cooperatively perform sensing on the sensing target based on the second beam information.

Specifically, the first sensing device is used as a receive end, and the user equipment is used as a transmit end. The user equipment transmits radio signal data for the sensing target based on the second beam information, and the first sensing device receives reflected radio signal data. A beam width of the transmit end is correspondingly adjusted based on an indication of the control device. A beam width of the receive end may be correspondingly adjusted based on an indication of the control device, or may not be adjusted.

It may be understood that, when the second sensing control information further includes the sensing type, and/or the sensing precision information, and/or the sensing time information, correspondingly, the first sensing device and the user equipment further cooperatively perform sensing on the sensing target based on the sensing type, and/or the sensing precision information, and/or the sensing time information.

S611. The first sensing device sends second sensing data to the control device. Correspondingly, the control device receives the second sensing data from the first sensing device.

S612. The control device processes the second sensing data to obtain a second sensing result.

S613. The control device sends the second sensing result to the requesting device. Correspondingly, the requesting device receives the second sensing result from the control device.

It should be understood that for specific descriptions of step S601 to step S608 and step S611 to step S613, refer to related descriptions of step S201 to step S208 and step S211 to step S213 in the foregoing embodiment. Details are not described herein again.

According to the foregoing solution, the control device may first indicate the first sensing device to perform sweeping sensing within a specific area range by using a wider beam, and perform target identification on sweeping sensing data obtained by the first sensing device. When a sensing target is identified, the control device may adjust a beam width, a sensing type, and a sensing mode, and then indicate the user equipment to assist the first sensing device in performing tracking sensing on the sensing target by using a narrower beam. In this way, efficient sweeping sensing and high-precision tracking sensing can be implemented, sensing requirements in two different phases, namely, target detection and target tracking, can be met, and sensing resource utilization can be improved.

Optionally, the first sensing device is a base station, and the foregoing solution is applicable to a sensing service, for example, target intrusion detection and tracking, in a mode of sensing based on transmitting of UE and receiving of the base station.

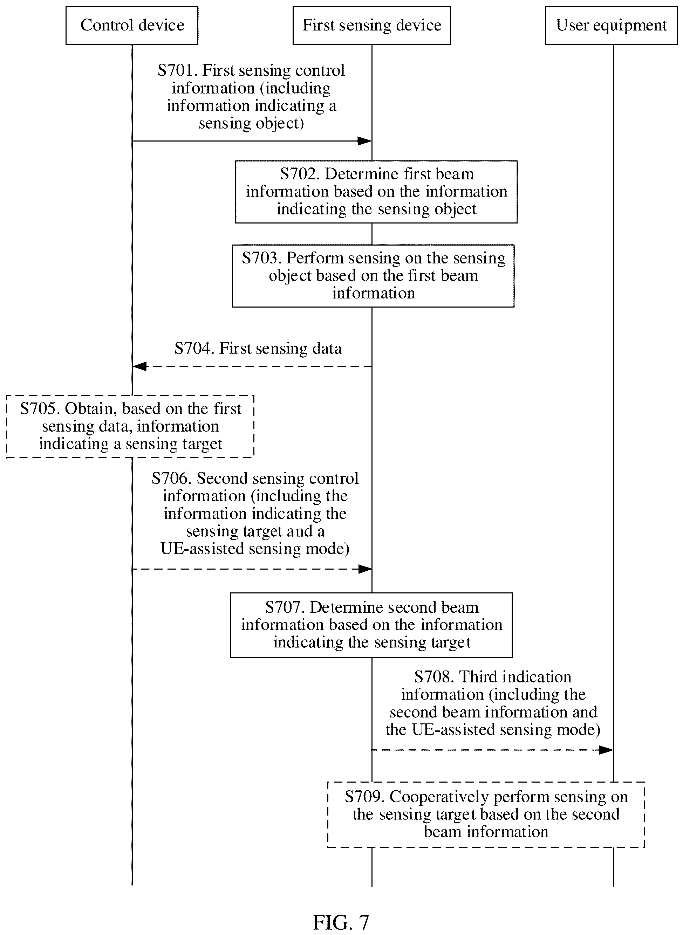

FIG. 7 is an interaction flowchart of another sensing method according to an embodiment of this application. The sensing method shown in FIG. 7 includes the following step S701 to step S709.

S701. A control device sends first sensing control information to a first sensing device. Correspondingly, the first sensing device receives the first sensing control information from the control device.

S702. The first sensing device determines first beam information based on information indicating a sensing object.

S703. The first sensing device performs sensing on the sensing object based on the first beam information.

S704. The first sensing device sends first sensing data to the control device. Correspondingly, the control device receives the first sensing data from the first sensing device.

S705. The control device obtains, based on the first sensing data, information indicating a sensing target.

S706. The control device sends second sensing control information to the first sensing device. Correspondingly, the first sensing device receives the second sensing control information from the control device.

The second sensing control information includes the information indicating the sensing target, and further includes a UE-assisted sensing mode. The second sensing control information indicates the first sensing device and user equipment to cooperatively perform sensing on the sensing target.

Optionally, the second sensing control information further includes a sensing type, and/or sensing precision information, and/or sensing time information. Correspondingly, the second sensing control information further indicates the first sensing device and the user equipment to cooperatively perform sensing on the sensing target based on the sensing type, and/or the sensing precision information, and/or the sensing time information.

S707. The first sensing device determines second beam information based on the information indicating the sensing target.

S708. The first sensing device sends third indication information to the user equipment. Correspondingly, the user equipment receives the third indication information from the first sensing device.

The third indication information includes the second beam information and the UE-assisted sensing mode. The third indication information indicates the user equipment to assist, based on the second beam information, the first sensing device in performing sensing on the sensing target.

Optionally, the third indication information further includes a sensing type, and/or sensing precision information, and/or sensing time information. Correspondingly, the third indication information further indicates the user equipment to assist, based on the sensing type, and/or the sensing precision information, and/or the sensing time information, the first sensing device in performing sensing on the sensing object.

In an embodiment, the third indication information may be information sent by the first sensing device to the user equipment based on a radio resource control (Radio Resource Control, RRC) protocol.

S709. The first sensing device and the user equipment cooperatively perform sensing on the sensing target based on the second beam information.

It may be understood that, when the second sensing control information further includes the sensing type, and/or the sensing precision information, and/or the sensing time information, or the third indication information further includes the sensing type, and/or the sensing precision information, and/or the sensing time information, correspondingly, the first sensing device and the user equipment further cooperatively perform sensing on the sensing object based on the sensing type, and/or the sensing precision information, and/or the sensing time information.

It should be understood that for specific descriptions of step S701 to step S705 and step S707, refer to related descriptions of step S301 to step S305 and step S307 in the foregoing embodiment. Details are not described herein again.

Optionally, step S705 to step S707 may be replaced with the following steps:
The control device determines the second beam information based on the first sensing data. The control device sends the second sensing control information to the first sensing device. Correspondingly, the first sensing device receives the second sensing control information from the control device. The second sensing control information includes the second beam information.

According to the foregoing solution, the control device may obtain, based on the first sensing data, the information indicating the sensing target, and determine the second beam information based on the information indicating the sensing target, that is, the control device independently determines the second beam information. After determining the second beam information, the control device includes the second beam information into the second sensing control information, and sends the second sensing control information to the first sensing device, so that the first sensing device can directly obtain the second beam information from the second sensing control information.

Optionally, step S704 to step S707 may be replaced with the following steps:
The first sensing device obtains, based on the first sensing data, the information indicating the sensing target. The first sensing device determines the second beam information based on the information indicating the sensing target.

According to the foregoing solution, the first sensing device may obtain, based on the first sensing data, the information indicating the sensing target, and determine the second beam information based on the information indicating the sensing target, that is, the first sensing device independently determines the second beam information.

Optionally, in the embodiment shown in FIG. 6 or FIG. 7, the user equipment may be replaced with a base station, and correspondingly, the first sensing device is user equipment, so that the user equipment is used as a receive end, and the base station is used as a transmit end. This is applicable to a sensing service in a mode of sensing based on transmitting of the base station and receiving of the UE.

The foregoing describes in detail the methods in embodiments of this application. The following provides an apparatus for implementing any method in embodiments of this application. For example, an apparatus is provided, including units (or means) configured to implement steps performed by a network element/device in any one of the foregoing methods.

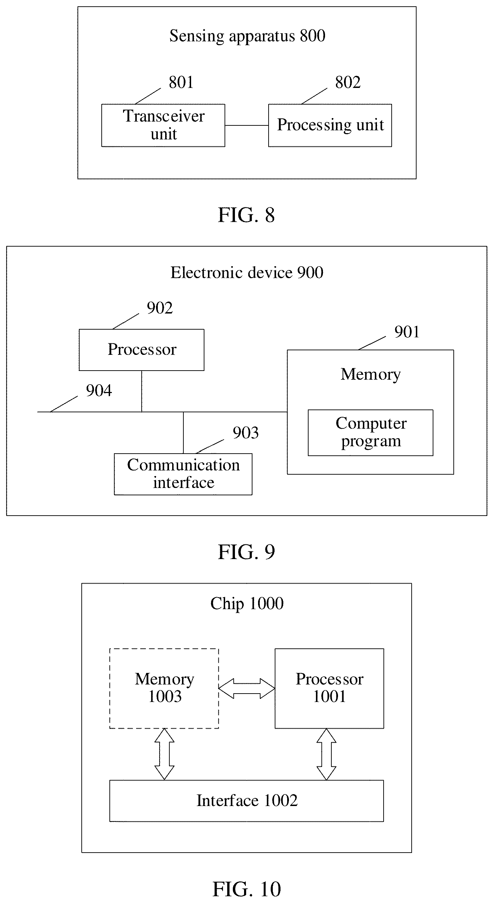

FIG. 8 is a diagram of a structure of a sensing apparatus according to an embodiment of this application.

As shown in FIG. 8, the sensing apparatus 800 may include a transceiver unit 801 and a processing unit 802. The transceiver unit 801 and the processing unit 802 may be software, hardware, or a combination of software and hardware.

The transceiver unit 801 may implement a sending function and/or a receiving function, and the transceiver unit 801 may also be described as a communication unit. Alternatively, the transceiver unit 801 may be a unit integrating an obtaining unit and a sending unit. The obtaining unit is configured to implement a receiving function, and the sending unit is configured to implement a sending function. Optionally, the transceiver unit 801 may be configured to receive information sent by another apparatus, and may be further configured to send information to another apparatus.

In a possible design, the sensing apparatus 800 may correspond to the control device in the foregoing method embodiments. For example, the sensing apparatus 800 may be the control device in the foregoing method embodiments, or may be a chip in the control device. The sensing apparatus 800 may include units configured to perform operations performed by the control device in the foregoing method embodiments. In addition, the units in the sensing apparatus 800 are respectively configured to perform the operations performed by the control device in the foregoing method embodiments. The units are described as follows:
The transceiver unit 801 is configured to receive a sensing request from a requesting device. The sensing request includes information indicating a sensing object.

The processing unit 802 is configured to determine first beam information based on the information indicating the sensing object. The first beam information indicates a beam used to perform sensing on the sensing object.

The transceiver unit 801 is further configured to send first sensing control information to a first sensing device. The first sensing control information includes the first beam information, and the first sensing device is configured to perform sensing on the sensing object.

In a possible implementation, the first beam information includes a beam width, or the first beam information includes a beam width and a beam direction.

In a possible implementation, the first sensing control information further includes a sensing type.

In a possible implementation, the information indicating the sensing object includes one or more of the following information: an identifier of the sensing object, sensing area information, and sensing location information.

In a possible implementation, the first sensing control information further includes sensing precision information and/or sensing time information.

In a possible implementation, the first sensing control information further includes a cooperative sensing mode.

In a possible implementation, the transceiver unit 801 is further configured to send the first sensing control information to a second sensing device. The second sensing device is configured to perform sensing on the sensing object.

In a possible implementation, the transceiver unit 801 is further configured to receive first sensing data from the first sensing device. The first sensing data is sensing data obtained by the first sensing device by performing sensing on the sensing object based on the first beam information. The processing unit 802 is further configured to process the first sensing data to obtain a first sensing result. The transceiver unit 801 is further configured to send the first sensing result to the requesting device.

In a possible implementation, the processing unit 802 is further configured to determine second beam information based on the first sensing result. The second beam information is different from the first beam information. The transceiver unit 801 is further configured to send second sensing control information to the first sensing device. The second sensing control information includes the second beam information.

In a possible implementation, the first beam information includes a first beam width, the second beam information includes a second beam width, and that the second beam information is different from the first beam information includes that the second beam width is less than the first beam width.

In another possible design, the sensing apparatus 800 may correspond to the first sensing device in the foregoing method embodiments. For example, the sensing apparatus 800 may be the first sensing device in the foregoing method embodiments, or may be a chip in the first sensing device. The sensing apparatus 800 may include units configured to perform operations performed by the first sensing device in the foregoing method embodiments. In addition, the units in the sensing apparatus 800 are respectively configured to perform the operations performed by the first sensing device in the foregoing method embodiments.

In a possible embodiment, the units are described as follows:
The transceiver unit 801 is configured to receive first sensing control information from a control device. The first sensing control information includes first beam information, and the first beam information indicates a beam used to perform sensing on a sensing object.

The processing unit 802 is configured to perform sensing on the sensing object based on the first beam information.

In another possible embodiment, the units are described as follows:
The transceiver unit 801 is configured to receive first sensing control information from a control device. The first sensing control information includes information indicating a sensing object.

The processing unit 802 is configured to: determine first beam information based on the information indicating the sensing object, where the first beam information indicates a beam used to perform sensing on the sensing object; and perform sensing on the sensing object based on the first beam information.

In a possible implementation, the first beam information includes a beam width, or the first beam information includes a beam width and a beam direction.

In a possible implementation, the first sensing control information further includes a sensing type.

In a possible implementation, the information indicating the sensing object includes one or more of the following information: an identifier of the sensing object, sensing area information, and sensing location information.

In a possible implementation, the first sensing control information further includes sensing precision information and/or sensing time information.

In a possible implementation, the first sensing control information further includes a cooperative sensing mode.

In a possible implementation, the transceiver unit 801 is further configured to send indication information to a second sensing device. The indication information includes the first beam information and the cooperative sensing mode, and the second sensing device is configured to perform sensing on the sensing object.

In a possible implementation, the transceiver unit 801 is further configured to receive second sensing control information from the control device. The second sensing control information includes second beam information, the second beam information indicates a beam used to perform sensing on a sensing target, and the second beam information is different from the first beam information. The processing unit 802 is further configured to perform sensing on the sensing target based on the second beam information.

In a possible implementation, the transceiver unit 801 is further configured to receive second sensing control information from the control device. The second sensing control information includes information indicating a sensing target. The processing unit 802 is further configured to: determine second beam information based on the information indicating the sensing target, where the second beam information indicates a beam used to perform sensing on the sensing target, and the second beam information is different from the first beam information; and perform sensing on the sensing target based on the second beam information.

In a possible implementation, the processing unit 802 is further configured to: obtain, based on first sensing data, information indicating a sensing target, where the first sensing data is sensing data obtained by the processing unit 802 by performing sensing on the sensing object based on the first beam information; determine second beam information based on the information indicating the sensing target, where the second beam information indicates a beam used to perform sensing on the sensing target, and the second beam information is different from the first beam information; and perform sensing on the sensing target based on the second beam information.

In a possible implementation, the first beam information includes a first beam width, the second beam information includes a second beam width, and that the second beam information is different from the first beam information includes that the second beam width is less than the first beam width.

According to this embodiment of this application, a part or all of the units of the apparatus shown in FIG. 8 may be combined into one or more other units, or one (or more) of the units may be divided into a plurality of smaller functional units. In this way, same operations can be implemented without affecting achievement of technical effects of embodiments of this application. The foregoing units are obtained through division based on logical functions. During actual application, a function of one unit may be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of each unit, refer to corresponding descriptions in the method embodiments shown in FIG. 2 to FIG. 7.

FIG. 9 is a diagram of a structure of an electronic device according to an embodiment of this application. The electronic device 900 may include a memory 901 and a processor 902. Further, optionally, the electronic device 900 may further include a communication interface 903 and a bus 904. The memory 901, the processor 902, and the communication interface 903 implement a communication connection to each other by using the bus 904. The communication interface 903 is configured to exchange data with another device.

The memory 901 is configured to provide storage space, and the storage space may store data such as an operating system and a computer program. The memory 901 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 902 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU). The processor 902 may alternatively be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

In a possible design, the electronic device 900 may correspond to the control device in the foregoing method embodiments. For example, the electronic device 900 may be the control device in the foregoing method embodiments, or may be a chip in the control device. The electronic device 900 may include components configured to perform operations performed by the control device in the method embodiments. In addition, the components in the electronic device 900 are respectively configured to implement the operations performed by the control device in the method embodiments. The processor 902 invokes the computer program stored in the memory 901, to perform the foregoing sensing method. Details may be as follows:
The control device receives a sensing request from a requesting device. The sensing request includes information indicating a sensing object.

The control device determines first beam information based on the information indicating the sensing object. The first beam information indicates a beam used to perform sensing on the sensing object.

The control device sends first sensing control information to a first sensing device. The first sensing control information includes the first beam information, and the first sensing device is configured to perform sensing on the sensing object.

In a possible implementation, the first beam information includes a beam width, or the first beam information includes a beam width and a beam direction.

In a possible implementation, the first sensing control information further includes a sensing type.

In a possible implementation, the information indicating the sensing object includes one or more of the following information: an identifier of the sensing object, sensing area information, and sensing location information.

In a possible implementation, the first sensing control information further includes sensing precision information and/or sensing time information.

In a possible implementation, the first sensing control information further includes a cooperative sensing mode.

In a possible implementation, the method further includes: The control device sends the first sensing control information to a second sensing device. The second sensing device is configured to perform sensing on the sensing object.

In a possible implementation, the method further includes: The control device receives first sensing data from the first sensing device. The first sensing data is sensing data obtained by the first sensing device by performing sensing on the sensing object based on the first beam information. The control device processes the first sensing data to obtain a first sensing result. The control device sends the first sensing result to the requesting device.

In a possible implementation, the method further includes: The control device determines second beam information based on the first sensing result. The second beam information is different from the first beam information. The control device sends second sensing control information to the first sensing device. The second sensing control information includes the second beam information.

In a possible implementation, the first beam information includes a first beam width, the second beam information includes a second beam width, and that the second beam information is different from the first beam information includes that the second beam width is less than the first beam width.

In another possible design, the electronic device 900 may correspond to the first sensing device in the foregoing method embodiments. For example, the electronic device 900 may be the first sensing device in the foregoing method embodiments, or may be a chip in the first sensing device. The electronic device 900 may include components configured to perform operations performed by the first sensing device in the foregoing method embodiments. In addition, the components in the electronic device 900 are respectively configured to implement the operations performed by the first sensing device in the foregoing method embodiments.

In a possible embodiment, the processor 902 invokes the computer program stored in the memory 901, to perform the foregoing sensing method. Details may be as follows:
The first sensing device receives first sensing control information from a control device. The first sensing control information includes first beam information, and the first beam information indicates a beam used to perform sensing on a sensing object.

The first sensing device performs sensing on the sensing object based on the first beam information.

In another possible embodiment, the processor 902 invokes the computer program stored in the memory 901, to perform the foregoing sensing method. Details may be as follows:
The first sensing device receives first sensing control information from a control device. The first sensing control information includes information indicating a sensing object.

The first sensing device determines first beam information based on the information indicating the sensing object. The first beam information indicates a beam used to perform sensing on the sensing object.

The first sensing device performs sensing on the sensing object based on the first beam information.

In a possible implementation, the first beam information includes a beam width, or the first beam information includes a beam width and a beam direction.

In a possible implementation, the first sensing control information further includes a sensing type.

In a possible implementation, the information indicating the sensing object includes one or more of the following information: an identifier of the sensing object, sensing area information, and sensing location information.

In a possible implementation, the first sensing control information further includes sensing precision information and/or sensing time information.

In a possible implementation, the first sensing control information further includes a cooperative sensing mode.

In a possible implementation, the method further includes: The first sensing device sends indication information to a second sensing device. The indication information includes the first beam information and the cooperative sensing mode, and the second sensing device is configured to perform sensing on the sensing object.

In a possible implementation, the method further includes: The first sensing device receives second sensing control information from the control device. The second sensing control information includes second beam information, the second beam information indicates a beam used to perform sensing on a sensing target, and the second beam information is different from the first beam information. The first sensing device performs sensing on the sensing target based on the second beam information.

In a possible implementation, the method further includes: The first sensing device receives second sensing control information from the control device. The second sensing control information includes information indicating a sensing target. The first sensing device determines second beam information based on the information indicating the sensing target. The second beam information indicates a beam used to perform sensing on the sensing target, and the second beam information is different from the first beam information. The first sensing device performs sensing on the sensing target based on the second beam information.

In a possible implementation, the method further includes: The first sensing device obtains, based on first sensing data, information indicating a sensing target. The first sensing data is sensing data obtained by the first sensing device by performing sensing on the sensing object based on the first beam information. The first sensing device determines second beam information based on the information indicating the sensing target. The second beam information indicates a beam used to perform sensing on the sensing target, and the second beam information is different from the first beam information. The first sensing device performs sensing on the sensing target based on the second beam information.

In a possible implementation, the first beam information includes a first beam width, the second beam information includes a second beam width, and that the second beam information is different from the first beam information includes that the second beam width is less than the first beam width.

For a case in which the electronic device may be a chip or a chip system, refer to FIG. 10, which is a diagram of a structure of a chip according to an embodiment of this application.

As shown in FIG. 10, the chip 1000 includes a processor 1001 and an interface 1002. There may be one or more processors 1001, and there may be a plurality of interfaces 1002. It should be noted that a function corresponding to each of the processor 1001 and the interface 1002 may be implemented by using a hardware design, or may be implemented by using a software design, or may be implemented by combining software and hardware. This is not limited herein.

Optionally, the chip 1000 may further include a memory 1003, and the memory 1003 is configured to store necessary program instructions and data.

In this application, the processor 1001 may be configured to invoke, from the memory 1003, a program for implementing the sensing method provided in one or more embodiments of this application on the electronic device, and execute instructions included in the program. The interface 1002 may be configured to output an execution result of the processor 1001. In this application, the interface 1002 may be specifically configured to output messages or information of the processor 1001.

For the sensing method provided in one or more embodiments of this application, refer to the foregoing method embodiments. Details are not described herein again.

According to the method provided in embodiments of this application, an embodiment of this application further provides a computer-readable storage medium. The computer-readable storage medium stores a computer program. When the computer program runs on one or more processors, the method shown in the foregoing method embodiments may be implemented.

According to the method provided in embodiments of this application, an embodiment of this application further provides a computer program product. The computer program product includes a computer program. When the computer program runs on a processor, the method shown in the foregoing method embodiments may be implemented.

According to the method provided in embodiments of this application, an embodiment of this application further provides a sensing system. The system includes at least one sensing apparatus 800, electronic device 900, or chip 1000 described above.

According to the method provided in embodiments of this application, an embodiment of this application further provides a sensing system. The system includes a control device and a first sensing device. The control device is configured to perform steps performed by the control device in the foregoing method embodiments, and the first sensing device is configured to perform steps performed by the first sensing device in the foregoing method embodiments.

It should be understood that the memory in embodiments of this application may be a volatile memory or a non-volatile memory, or may include a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in this specification aims to include but is not limited to these memories and any memory of another appropriate type.

The foregoing embodiments may be all or partly implemented by using software, hardware, firmware, or any combination thereof. When software is used for implementation, the embodiments may be all or partly implemented in a form of a computer program product. The computer program product includes one or more computer programs or instructions. When the computer programs or the instructions are loaded and executed on a computer, the procedures or functions in embodiments of this application are all or partly executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both types.

A person of ordinary skill in the art may be aware that, with reference to units and algorithm steps in the examples described in embodiments provided in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part of or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A sensing method, comprising:
receiving, by a control device, a sensing request from a requesting device, wherein the sensing request comprises information indicating a sensing object;
determining, by the control device, first beam information based on the information indicating the sensing object, wherein the first beam information indicates a beam used to perform sensing on the sensing object; and
sending, by the control device, first sensing control information to a first sensing device, wherein the first sensing control information comprises the first beam information, and the first sensing device is configured to perform sensing on the sensing object.

2. The method according to claim 1, wherein the first beam information comprises a beam width, or the first beam information comprises a beam width and a beam direction.

3. The method according to claim 1 or 2, wherein the first sensing control information further comprises a sensing type.

4. The method according to any one of claims 1 to 3, wherein the information indicating the sensing object comprises one or more of the following information:
an identifier of the sensing object, sensing area information, and sensing location information.

5. The method according to any one of claims 1 to 4, wherein the first sensing control information further comprises sensing precision information and/or sensing time information.

6. The method according to any one of claims 1 to 5, wherein the first sensing control information further comprises a cooperative sensing mode.

7. The method according to claim 6, wherein the method further comprises:
sending, by the control device, the first sensing control information to the second sensing device, wherein the second sensing device is configured to perform sensing on the sensing object.

8. The method according to any one of claims 1 to 7, wherein the method further comprises:
receiving, by the control device, first sensing data from the first sensing device, wherein the first sensing data is sensing data obtained by the first sensing device by performing sensing on the sensing object based on the first beam information;
processing, by the control device, the first sensing data to obtain a first sensing result; and
sending, by the control device, the first sensing result to the requesting device.

9. The method according to claim 8, wherein the method further comprises:
determining, by the control device, second beam information based on the first sensing result, wherein the second beam information is different from the first beam information; and
sending, by the control device, second sensing control information to the first sensing device, wherein the second sensing control information comprises the second beam information.

10. The method according to claim 9, wherein the first beam information comprises a first beam width, the second beam information comprises a second beam width, and that the second beam information is different from the first beam information comprises that the second beam width is less than the first beam width.

11. A sensing method, comprising:
receiving, by a first sensing device, first sensing control information from a control device, wherein the first sensing control information comprises first beam information, and the first beam information indicates a beam used to perform sensing on a sensing object; and
performing, by the first sensing device, sensing on the sensing object based on the first beam information.

12. A sensing method, comprising:
receiving, by a first sensing device, first sensing control information from a control device, wherein the first sensing control information comprises information indicating a sensing object;
determining, by the first sensing device, first beam information based on the information indicating the sensing object, wherein the first beam information indicates a beam used to perform sensing on the sensing object; and
performing, by the first sensing device, sensing on the sensing object based on the first beam information.

13. The method according to claim 11 or 12, wherein the first beam information comprises a beam width, or the first beam information comprises a beam width and a beam direction.

14. The method according to any one of claims 11 to 13, wherein the first sensing control information further comprises a sensing type.

15. The method according to any one of claims 11 to 14, wherein the information indicating the sensing object comprises one or more of the following information:
an identifier of the sensing object, sensing area information, and sensing location information.

16. The method according to any one of claims 11 to 15, wherein the first sensing control information further comprises sensing precision information and/or sensing time information.

17. The method according to any one of claims 11 to 16, wherein the first sensing control information further comprises a cooperative sensing mode.

18. The method according to claim 17, wherein the method further comprises:
sending, by the first sensing device, indication information to a second sensing device, wherein the indication information comprises the first beam information and the cooperative sensing mode, and the second sensing device is configured to perform sensing on the sensing object.

19. The method according to any one of claims 11 to 18, wherein the method further comprises:
receiving, by the first sensing device, second sensing control information from the control device, wherein the second sensing control information comprises second beam information, the second beam information indicates a beam used to perform sensing on a sensing target, and the second beam information is different from the first beam information; and
performing, by the first sensing device, sensing on the sensing target based on the second beam information.

20. The method according to any one of claims 11 to 18, wherein the method further comprises:
receiving, by the first sensing device, second sensing control information from the control device, wherein the second sensing control information comprises information indicating a sensing target;
determining, by the first sensing device, second beam information based on the information indicating the sensing target, wherein the second beam information indicates a beam used to perform sensing on the sensing target, and the second beam information is different from the first beam information; and
performing, by the first sensing device, sensing on the sensing target based on the second beam information.

21. The method according to any one of claims 11 to 18, wherein the method further comprises:
obtaining, by the first sensing device based on first sensing data, information indicating a sensing target, wherein the first sensing data is sensing data obtained by the first sensing device by performing sensing on the sensing object based on the first beam information;
determining, by the first sensing device, second beam information based on the information indicating the sensing target, wherein the second beam information indicates a beam used to perform sensing on the sensing target, and the second beam information is different from the first beam information; and
performing, by the first sensing device, sensing on the sensing target based on the second beam information.

22. The method according to any one of claims 17 to 19, wherein the first beam information comprises a first beam width, the second beam information comprises a second beam width, and that the second beam information is different from the first beam information comprises that the second beam width is less than the first beam width.

23. A sensing apparatus, comprising a unit configured to perform steps of the method according to any one of claims 1 to 10, or a unit configured to perform steps of the method according to any one of claims 11 to 22.

24. A sensing apparatus, comprising a processor, wherein
when the processor invokes a computer program or instructions in a memory, the method according to any one of claims 1 to 10 is performed, or the method according to any one of claims 11 to 22 is performed.

25. A computer-readable storage medium, wherein the computer-readable storage medium stores a computer program or instructions, and when the computer program or the instructions are executed, the method according to any one of claims 1 to 10 is implemented, or the method according to any one of claims 11 to 22 is implemented.

26. A computer program product, comprising a computer program or instructions, wherein when the computer program or the instructions are executed, the method according to any one of claims 1 to 10 is implemented, or the method according to any one of claims 11 to 22 is implemented.

27. A sensing system, comprising a control device and a first sensing device, wherein the control device is configured to perform the method according to any one of claims 1 to 10, and the first sensing device is configured to perform the method according to any one of claims 11 to 22.
